# EUROPEAN PATENT APPLICATION

(11) **EP 4 518 222 A1**
(43) Date of publication of application: **05.03.2025**
(21) Application number: 23795180.1
(22) Date of filing: 20.04.2023
(51) Int. Cl.: H04L 5/00

(54) **METHOD FOR PROCESSING OVERLAP OF PHYSICAL UPLINK CONTROL CHANNELS, TERMINAL, AND NETWORK-SIDE DEVICE**

(30) Priority: 25.04.2022 CN 202210442532; 11.08.2022 CN 202210964226
(71) Applicant: Datang Mobile Communications Equipment Co., Ltd., Beijing 100085 (CN)
(72) Inventor: XING, Yanping, Beijing 100085 (CN); SI, Qianqian, Beijing 100085 (CN); GAO, Xuejuan, Beijing 100085 (CN)
(74) Representative: Studio Torta S.p.A.
(86) International application number: PCT/CN2023/089475
(87) International publication number: WO 2023/207747

(57) **Abstract**

A method for processing overlapping physical uplink control channels, a terminal and a network side device are provided. The method includes: when PUCCHs are overlapped, a terminal determining a processing order for the PUCCHs according to priorities of uplink control information (UCI) carried by the PUCCHs and/or starting time of the PUCCHs; performing a de-overlapping process for the PUCCHs according to the processing order.

## Description

### CROSS REFERENCE OF RELATED APPLICATION

The present disclosure claims a priority of Chinese patent disclosure No. 202210442532.5 filed on April 25, 2022 and a priority of Chinese patent disclosure No. 202210964226.8 filed on August 11, 2022, which is incorporated herein by reference in its entirety.

### TECHNICAL FIELD

The present disclosure relates to the field of communication technology, and in particular to a method for processing overlapping physical uplink control channels, a terminal and a network side device.

### BACKGROUND

In the New Radio (NR) system, the Physical Uplink Control Channel (PUCCH) is used to carry uplink control information (UCI). In the same PUCCH group, the User Equipment (UE) does not support sending multiple PUCCHs at the same time. Therefore, if the UE needs to send PUCCHs overlapped in time domain, the UE needs to discard PUCCHs and/or multiplex UCI to resolve the PUCCH overlap.

### SUMMARY

The present disclosure is to provide a method for processing overlapping physical uplink control channels, a terminal and a network side device, to solve the problem that the method for processing overlapping PUCCH in the related art causes information transmission errors.

A method for processing overlapping physical uplink control channels is provided in the embodiment of the present disclosure, including:
when physical uplink control channels (PUCCHs) are overlapped, a terminal determining a processing order for the PUCCHs according to priorities of uplink control information (UCI) carried by the PUCCHs and/or starting time of the PUCCHs;
performing a de-overlapping process for the PUCCHs according to the processing order.

Optionally, when physical uplink control channels (PUCCHs) are overlapped, the terminal determining the processing order of the PUCCHs according to the priority of UCI carried by the PUCCHs and/or the starting time of the PUCCHs includes at least one of the following:
when first PUCCH with repetitions overlaps with the M second PUCCHs, determining a processing order for the M second PUCCHs according to priorities of UCI carried by the M second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, when each of the N first PUCCHs has an overlapped PUCCH, at least one identical overlapped PUCCH exists between each of the N first PUCCHs.

Optionally, the method further includes:
repeating the following steps, until no PUCCH with repetitions overlaps with other PUCCHs in slots or sub-slots where the PUCCHs are located:
when the PUCCHs are overlapped, the terminal determining the processing order for the PUCCHs according to the priorities of the UCI carried by the PUCCHs and/or the starting time of the PUCCHs; and performing a de-overlapping processing for the PUCCHs according to the processing order.

Optionally, when the PUCCHs are overlapped, the terminal determining the processing order for the PUCCHs according to the priorities of UCI carried by the PUCCHs and/or the starting time of the PUCCHs includes:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the determining the third PUCCH according to the priorities of the UCI carried by the PUCCHs and/or the starting time of the PUCCHs includes:
Step 1: determining the third PUCCH from a first PUCCH candidate set according to the priorities of the UCI carried by the PUCCHs and the starting time of the PUCCHs;
the method further includes:
   Step 2: determining the fourth PUCCH from the first PUCCH candidate set; where the third PUCCH and the fourth PUCCH constitute a second PUCCH candidate set;
   the performing the de-overlapping processing between the PUCCH with repetitions and other PUCCHs includes:
      Step 3: performing the de-overlapping process for the PUCCH with repetitions and other PUCCHs in the second PUCCH candidate set;
      the method further includes:
         Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the determining the third PUCCH from the first PUCCH candidate set according to the priorities of the UCI carried by the PUCCHs and the starting time of the PUCCHs including one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the determining the third PUCCH from the first PUCCH candidate set according to the priorities of the UCI carried by the PUCCHs and the starting time of the PUCCHs further includes:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the determining the third PUCCH from the first PUCCH candidate set further includes:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
   any one of the X PUCCHs;
   the PUCCH with the longest duration among the X PUCCHs;
   any one of the PUCCHs with the longest duration among the X PUCCHs.

Optionally, the performing the de-overlapping process for the PUCCH with repetitions and other PUCCHs in the second PUCCH candidate set includes one of the following methods:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the updating the first PUCCH candidate set includes at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the determining to execute Step 1 or to end the operation according to the third PUCCH candidate set includes one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the determining the processing order for the PUCCHs according to the priorities of the UCI carried by the PUCCHs includes:
determining the processing order for the PUCCHs according to a descending order of priorities of the UCI carried by the PUCCHs.

Optionally, the determining the processing order for the PUCCHs according to the starting time of the PUCCHs includes:
determining the processing order for the PUCCHs according to an order from the PUCCH with an early starting time to the PUCCH with a late starting time.

Optionally, the determining the processing order for the PUCCHs according to the priorities of the UCI carried by the PUCCHs and the starting time of the PUCCHs includes:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
   or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

Optionally, the starting time includes at least one of the following:
starting slot;
start sub-slot;
start symbol.

Optionally, after the de-overlapping process for the PUCCHs, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priorities of the UCI includes:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

Optionally, the method further includes:
sending data through the PUCCH subjected to the de-overlapping process.

A method for processing overlapping physical uplink control channels is provided in the embodiment of the present disclosure, including:
when physical uplink control channels (PUCCHs) are overlapped, a network side device determining a processing order for the PUCCHs according to priorities of uplink control information (UCI) carried by the PUCCHs and/or starting time of the PUCCHs;
performing a de-overlapping process for the PUCCHs according to the processing order.

Optionally, when physical uplink control channels (PUCCHs) are overlapped, the network side device determining the processing order for the PUCCHs according to the priorities of UCI carried by the PUCCHs and/or the starting time of the PUCCHs includes at least one of the following:
when first PUCCH with repetitions overlaps with the M second PUCCHs, determining a processing order for the second PUCCHs according to the priorities of UCI carried by the second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, when each of the N first PUCCHs has an overlapped PUCCH, at least one identical overlapped PUCCH exists between each of the N first PUCCHs.

Optionally, the method further includes:
repeating the following steps, until no PUCCH with repetitions overlaps with other PUCCHs in slots or sub-slots where the PUCCHs are located:
when the PUCCHs are overlapped, the network side device determining the processing order for the PUCCHs according to the priorities of the UCI carried by the PUCCHs and/or the starting time of the PUCCHs; and performing a de-overlapping processing for the PUCCHs according to the processing order.

Optionally, when the PUCCHs are overlapped, the network side device determining the processing order for the PUCCHs according to the priorities of UCI carried by the PUCCHs and/or the starting time of the PUCCHs includes:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the determining the third PUCCH according to the priorities of the UCI carried by the PUCCHs and/or the starting time of the PUCCHs includes:
Step 1: determining the third PUCCH from a first PUCCH candidate set according to the priorities of the UCI carried by the PUCCHs and the starting time of the PUCCHs;
the method further includes:
   Step 2: determining the fourth PUCCH from the first PUCCH candidate set; where the third PUCCH and the fourth PUCCH constitute a second PUCCH candidate set;
   the performing the de-overlapping processing between the PUCCH with repetitions and other PUCCHs includes:
      Step 3: performing the de-overlapping process for the PUCCH with repetitions and other PUCCHs in the second PUCCH candidate set;
      the method further includes:
         Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the determining the third PUCCH from the first PUCCH candidate set according to the priorities of the UCI carried by the PUCCHs and the starting time of the PUCCHs including one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the determining the third PUCCH from the first PUCCH candidate set according to the priorities of the UCI carried by the PUCCHs and the starting time of the PUCCHs further includes:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the determining the third PUCCH from the first PUCCH candidate set further includes:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
any one of the X PUCCHs;
the PUCCH with the longest duration among the X PUCCHs;
any one of the PUCCHs with the longest duration among the X PUCCHs.

Optionally, the performing the de-overlapping process for the PUCCH with repetitions and other PUCCHs in the second PUCCH candidate set includes one of the following methods:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or the starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the updating the first PUCCH candidate set includes at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the determining to execute Step 1 or to end the operation according to the third PUCCH candidate set includes one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the determining the processing order for the PUCCHs according to the priorities of the UCI carried by the PUCCHs includes:
determining the processing order for the PUCCHs according to a descending order of priorities of the UCI carried by the PUCCHs.

Optionally, the determining the processing order for the PUCCHs according to the starting time of the PUCCHs includes:
determining the processing order for the PUCCHs according to an order from the PUCCH with an early starting time to the PUCCH with a late starting time.

Optionally, the determining the processing order for the PUCCHs according to the priorities of the UCI carried by the PUCCHs and the starting time of the PUCCHs includes:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
   or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

Optionally, the starting time includes at least one of the following:
starting slot;
start sub-slot;
start symbol.

Optionally, after the de-overlapping process for the PUCCHs, there is no first PUCCH overlapped with other PUCCHs in the remaining PUCCHs.

Optionally, the method further includes:
receiving data through the PUCCH subjected to the de-overlapping process.

A terminal including is provided in the embodiment of the present disclosure: a memory, a transceiver, and a processor:
the memory is configured to store a computer program; a transceiver is configured to send and receive data under a control of the processor; and a processor is configured to read the computer program in the memory to perform:
when physical uplink control channels (PUCCHs) are overlapped, determining a processing order for the PUCCHs according to priorities of uplink control information (UCI) carried by the PUCCHs and/or starting time of the PUCCHs;
performing a de-overlapping process for the PUCCHs according to the processing order.

Optionally, the processor is configured to read the computer program in the memory to perform at least one of the following:
when first PUCCH with repetitions overlaps with the M second PUCCHs, determining a processing order for the M second PUCCHs according to priorities of UCI carried by the M second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, when each of the N first PUCCHs has an overlapped PUCCH, at least one identical overlapped PUCCH exists between each of the N first PUCCHs.

Optionally, the processor is configured to read the computer program in the memory to perform:
repeating the following steps, until no PUCCH with repetitions overlaps with other PUCCHs in slots or sub-slots where the PUCCHs are located:
when the PUCCHs are overlapped, the terminal determining the processing order for the PUCCHs according to the priorities of the UCI carried by the PUCCHs and/or the starting time of the PUCCHs; and performing a de-overlapping processing for the PUCCHs according to the processing order.

Optionally, the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; where the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the processor is configured to read the computer program in the memory to perform one of the following:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
   any one of the X PUCCHs;
   the PUCCH with the longest duration among the X PUCCHs;
   any one of the PUCCHs with the longest duration among the X PUCCHs.

Optionally, the processor is configured to read the computer program in the memory to perform one of the following:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the processor is configured to read the computer program in the memory to perform:
determining the processing order for the PUCCHs according to a descending order of priorities of the UCI carried by the PUCCHs.

Optionally, the processor is configured to read the computer program in the memory to perform:
determining the processing order for the PUCCHs according to an order from the PUCCH with an early starting time to the PUCCH with a late starting time.

Optionally, the processor is configured to read the computer program in the memory to perform:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
   or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

Optionally, the starting time includes at least one of the following:
starting slot;
start sub-slot;
start symbol.

Optionally, after the de-overlapping process for the PUCCHs, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priorities of the UCI includes:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

Optionally, the transceiver is further configured to perform:
sending data through the PUCCH subjected to the de-overlapping process.

A network side device is provided in the embodiment of the present disclosure, including: a memory, a transceiver, and a processor, where
the memory is configured to store a computer program; a transceiver is configured to send and receive data under a control of the processor; and a processor is configured to read the computer program in the memory to perform:
when physical uplink control channels (PUCCHs) are overlapped, a network side device determining a processing order for the PUCCHs according to priorities of uplink control information (UCI) carried by the PUCCHs and/or starting time of the PUCCHs;
performing a de-overlapping process for the PUCCHs according to the processing order.

Optionally, the processor is configured to read the computer program in the memory to perform at least one of the following:
when first PUCCH with repetitions overlaps with the M second PUCCHs, determining a processing order for the second PUCCHs according to the priorities of UCI carried by the second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, after the de-overlapping process for the PUCCHs, there is no first PUCCH overlapped with other PUCCHs in the remaining PUCCHs.

Optionally, the processor is configured to read the computer program in the memory to perform:
repeating the following steps, until no PUCCH with repetitions overlaps with other PUCCHs in slots or sub-slots where the PUCCHs are located:
when the PUCCHs are overlapped, the network side device determining the processing order for the PUCCHs according to the priorities of the UCI carried by the PUCCHs and/or the starting time of the PUCCHs; and performing a de-overlapping processing for the PUCCHs according to the processing order.

Optionally, the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; where the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the processor is configured to read the computer program in the memory to perform one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
   any one of the X PUCCHs;
   the PUCCH with the longest duration among the X PUCCHs;
   any one of the PUCCHs with the longest duration among the X PUCCHs.

Optionally, the processor is configured to read the computer program in the memory to perform one of the following methods:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or the starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the transceiver is configured to perform:
receiving data through the PUCCH subjected to the de-overlapping process.

An apparatus for processing overlapping physical uplink control channels is provided in the embodiment of the present disclosure, applied to a terminal and including:
a first determining unit, configured to, when physical uplink control channels (PUCCHs) are overlapped, determine a processing order for the PUCCHs according to priorities of uplink control information (UCI) carried by the PUCCHs and/or starting time of the PUCCHs;
a first processing unit, configured to perform a de-overlapping process for the PUCCHs according to the processing order.

An apparatus for processing overlapping physical uplink control channels is provided in the embodiment of the present disclosure, applied to a network side device and including:
a second determining unit, configured to, when physical uplink control channels (PUCCHs) are overlapped, determine a processing order for the PUCCHs according to priorities of uplink control information (UCI) carried by the PUCCHs and/or starting time of the PUCCHs;
a second processing unit, configured to perform a de-overlapping process for the PUCCHs according to the processing order.

A processor-readable storage medium is provided in the embodiment of the present disclosure, storing a computer program, where the computer program is executed by a processor to perform the method for processing overlapping physical uplink control channels hereinabove.

The beneficial effects of the above embodiment disclosed in the present disclosure are:
according to the embodiments of the present disclosure, when PUCCHs are overlapped, the processing order for the PUCCHs is determined according to the priorities of the UCI carried by the PUCCHs and/or the starting time of the PUCCHs, and the de-overlapping is performed for the PUCCHs according to the processing order, to ensure that the processing results of the PUCCH overlapping on the terminal and the network side device are consistent, thereby avoiding missing or wrong transmission of information.

### BRIEF DESCRIPTION OF THE DRAWINGS

FIG.1 is a schematic flow chart showing a method for processing overlapping physical uplink control channels in an embodiment of the present disclosure;
FIG.2 is a first schematic view of a de-overlapping processes for PUCCH in an embodiment of the present disclosure;
FIG.3 is a second schematic view of a de-overlapping processes for PUCCH in an embodiment of the present disclosure;
FIG.4 is a third schematic view of a de-overlapping processes for PUCCH in an embodiment of the present disclosure;
FIG.5 is a fourth schematic view of a de-overlapping processes for PUCCH in an embodiment of the present disclosure;
FIG.6 is a fifth schematic view of a de-overlapping processes for PUCCH in an embodiment of the present disclosure;
FIG.7 is a sixth schematic view of a de-overlapping processes for PUCCH in an embodiment of the present disclosure;
FIG.8 is a seventh schematic view of a de-overlapping processes for PUCCH in an embodiment of the present disclosure;
FIG.9 is an eighth schematic view of a de-overlapping processes for PUCCH in an embodiment of the present disclosure;
FIG.10 is a ninth schematic view of a de-overlapping processes for PUCCH in an embodiment of the present disclosure;
FIG.11 is a tenth schematic view of a de-overlapping processes for PUCCH in an embodiment of the present disclosure;
FIG. 12 is an eleventh schematic view of a de-overlapping processes for PUCCH in an embodiment of the present disclosure;
FIG.13 is a twelfth schematic view of a de-overlapping processes for PUCCH in an embodiment of the present disclosure;
FIG.14a is a thirteenth schematic view of a de-overlapping processes for PUCCH in an embodiment of the present disclosure;
FIG.14b is a fourteenth schematic view of a de-overlapping processes for PUCCH in an embodiment of the present disclosure;
FIG.14c is a fifteenth schematic view of a de-overlapping processes for PUCCH in an embodiment of the present disclosure;
FIG.15 is a first schematic view of an apparatus for processing overlapping physical uplink control channels in an embodiment of the present disclosure;
FIG. 16 is a second schematic view of an apparatus for processing overlapping physical uplink control channels in an embodiment of the present disclosure;
FIG. 17 is a schematic view of a terminal in an embodiment of the present disclosure; and
FIG.18 is a schematic view of a network side device in an embodiment of the present disclosure.

### DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

It should be understood that the references to "one embodiment "or "an embodiment "throughout the specification mean that specific features, structures, or characteristics associated with the embodiment are included in at least one embodiment of the present disclosure. Therefore, the references to "in one embodiment "or "in an embodiment "appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the execution order of each process should be determined by its function and internal logic, and should not constitute any limitation on the implementation process of the embodiments of the present disclosure.

In the embodiments of the present disclosure, the term "and/or" describes the association relationship of associated objects, indicating that three relationships may exist. For example, A and/or B may represent: A exists alone, A and B exist at the same time, and B exists alone. The character "/"generally indicates that the associated objects are in an "or" relationship.

The term "plurality" in the embodiments of the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

When describing the embodiments of the present disclosure, some concepts used in the following description are first explained.

Specifically, the embodiments of the present disclosure provide a method for processing overlapping physical uplink control channels, a terminal, and a network-side device, which solve the problem that the method for processing overlapped PUCCH in related technologies causes information transmission errors.

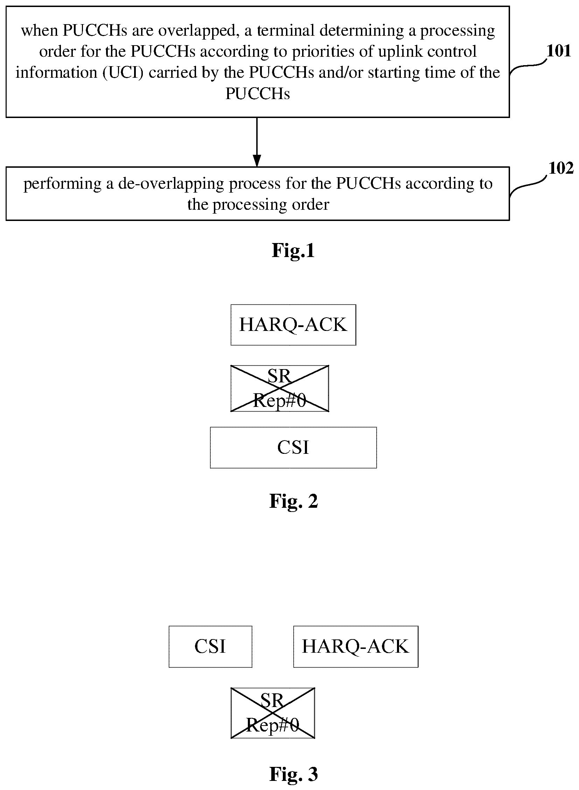

As shown in FIG1, an embodiment of the present disclosure provides a method for processing overlapping physical uplink control channels, which is applied to a terminal and specifically includes the following steps:

Step 101: when physical uplink control channels (PUCCHs) are overlapped, a terminal determining a processing order for the PUCCHs according to priorities of uplink control information (UCI) carried by the PUCCHs and/or starting time of the PUCCHs.

Step 102: performing a de-overlapping process for the PUCCHs according to the processing order.

In this embodiment, the PUCCH being overlapped means that multiple PUCCHs overlap in the time domain. When multiple PUCCHs overlap in the time domain, PUCCH discarding and/or UCI multiplexing are required to resolve the PUCCH overlap.

The processing order for the PUCCHs refers to the processing order when the de-overlapping process is performed for PUCCHs. For example, if PUCCH 1 overlaps with PUCCH 2 and PUCCH 3 in the time domain, when de-overlapping is performed, it is determined whether to prioritize the overlap between PUCCH 2 and PUCCH 1 or the overlap between PUCCH 3 and PUCCH 1. By determining the processing order of the PUCCH, it can be ensured that the terminal and the network side device have the same solution to the PUCCH overlap.

When determining the processing order for PUCCH, it can be determined according to the priorities of the UCI carried by the PUCCHs, for example: the PUCCH carrying UCI with a higher priority is processed first; or, it can be determined according to the starting time of the PUCCHs, for example: among each PUCCH, the PUCCH with an earlier starting time is processed first; or, it can be determined according to the priorities of the UCI carried by the PUCCHs and the starting time of the PUCCHs, for example: first determine the processing order according to the priorities of the UCI carried by the PUCCHs, and when the priorities are the same, determine the processing order according to the start symbol of the PUCCH.

Optionally, the method further includes: sending data using the PUCCH after the de-overlapping process.

The terminal performs de-overlapping processing on the PUCCH according to the processing order for the PUCCHs and then sends the PUCCH. It should be noted that the terminal and the network side device use the same rules when performing de-overlapping processing on the PUCCH to ensure the same de-overlapping processing results.

In the embodiments of the present disclosure, when there is overlap in PUCCH, the processing order for the PUCCHs is determined according to the priorities of the UCI carried by the PUCCHs and/or the starting time of the PUCCHs, and the PUCCH is de-overlapped according to the processing order to ensure that the processing results of the PUCCH overlap on the terminal and the network side device are consistent, thereby avoiding missing or wrong transmission of information.

In a slot/sub-slot, if at least one of the overlapped PUCCH transmissions uses repeated transmission, the overlap of the PUCCH with repetitions is resolved first. Then, if there is time domain overlap of non-repeated PUCCH transmissions, the time domain overlap of non-repeated PUCCH transmissions is resolved.

In the embodiments of the present disclosure, the de-overlapping processing of the PUCCH with repetitions determines the discarding of part of the PUCCH according to the priorities of the UCI carried by the PUCCHs and the starting slot/sub-slot. If only which UCI to discard is determined in the case of overlapping of PUCCH with repetitions, there may be a situation where the network side and the terminal have inconsistent understandings of the results of the overlap resolution, which may easily lead to missing or wrong transmission of information. Therefore, the present disclosure determines the processing order for the PUCCHs and performs de-overlapping processing on the PUCCH, which can ensure that the terminal and the network side device have a consistent understanding of the de-overlapping processing.

Optionally, after the processing order is determined according to the embodiment of the present disclosure, in each specific de-overlapping process, optionally, de-overlapping processing of the PUCCH with repetitions is performed according to the existing mechanism. Specifically, if the UCI type priority carried by the PUCCH with repetitions is the same as the UCI type priority carried by the overlapped PUCCH, the PUCCH transmission with a later starting slot/sub-slot in the slot/sub-slot is discarded; if the UCI type carried by the PUCCH with repetitions is different from the UCI type priority carried by the overlapped PUCCH, the PUCCH transmission carrying the lower priority UCI in the slot/sub-slot is discarded. The priority of UCI type is HARQ-ACK>SR>higher priority CSI>lower priority CSI. It should be noted that the embodiment of the present disclosure does not exclude other de-overlapping processing mechanisms.

Optionally, when the de-overlapping is performed for the PUCCH, the PUCCH that needs to be discarded can be determined based on the priorities of the UCI carried by the PUCCHs. If the priorities of the UCI carried by multiple PUCCHs are the same, the PUCCH that needs to be discarded can be determined based on the starting time of each PUCCH (for example: starting slot/sub-slot, start symbol).

For example: if PUCCH 1 overlaps with PUCCH 2, and the priority of the UCI carried by PUCCH 1 is the same as the priority of the UCI carried by PUCCH 2, the PUCCH transmission with a later starting slot/sub-slot in the slot/sub-slot is discarded; if the priority of the UCI carried by PUCCH 1 is different from that of the UCI carried by PUCCH 2, the PUCCH transmission carrying the lower priority UCI in the slot/sub-slot is discarded.

Optionally, the UCI includes at least one of the following:
Hybrid Automatic Repeat Request Acknowledgement (HARQ-ACK);
Scheduling Request (SR);
Channel State Information (CSI).

Optionally, the priority of the UCI includes:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

When determining the processing order for the PUCCHs according to the priorities of the UCI carried by the PUCCHs, the UCI carried by the PUCCHs may be HARQ-ACK, SR, CSI, etc. Among them, since the priority of HARQ-ACK is higher than the priority of SR, and the priority of SR is higher than the priority of CSI, when determining the processing order of the PUCCH, the overlap of the PUCCH carrying HARQ-ACK may be preferentially processed.

Specifically, when determining the processing order for the PUCCH, the processing order may be determined according to the priorities of the UCI carried by the PUCCHs and/or the starting slot of the PUCCH, where

Optionally, according to the priorities of the UCI carried by the PUCCHs, determining the processing order for the PUCCHs includes: determining the processing order for the PUCCHs according to a descending order of priorities of the UCI carried by the PUCCHs. That is, the overlapping problem of the PUCCH carrying a higher priority UCI is preferentially processed. For example: PUCCH 1 has time domain overlap with PUCCH 2 and PUCCH 3, and the priority of the UCI carried by PUCCH 2 is higher than the priority of the UCI carried by PUCCH 3, then the overlap of PUCCH 2 and PUCCH 1 is preferentially processed.

Optionally, determining the processing order for the PUCCHs according to the starting time of the PUCCHs includes: determining the processing order for the PUCCHs according to an order from the PUCCH with an early starting time to the PUCCH with a late starting time. That is, the overlapping problem of the PUCCH with an earlier starting time is preferentially processed. For example: PUCCH 1 overlaps with PUCCH 2 and PUCCH 3 in the time domain, and the starting time of PUCCH 3 is earlier than the starting time of PUCCH 2, then the overlap of PUCCH 3 with PUCCH 1 is preferentially processed.

Optionally, determining a processing order for the PUCCHs according to a priorities of the UCI carried by the PUCCHs and a starting time of the PUCCHs includes:
1) determine a first processing order according to a descending order of priorities of the UCI carried by the PUCCHs; if there are at least two UCIs carried by the PUCCHs with the same priority, determine a second processing order according to the order from the PUCCH with an early starting time to the PUCCH with a late starting time which have the same priority;
   or,
2) determine the third processing order according to an order from the PUCCH with an early starting time to the PUCCH with a late starting time; if there are at least two PUCCHs with the same starting time, determine the fourth processing order according to a descending order of priorities of the UCI of the PUCCHs with the same starting time.

In the above scheme 1), the processing order of PUCCH is first determined according to the priority of the UCI carried by PUCCH. If there are multiple UCIs carried by PUCCH with the same priority, the processing order is determined according to the starting time of each PUCCH with the same priority. For example: PUCCH 1 overlaps with PUCCH 2, PUCCH 3, and PUCCH 4 in the time domain, the priority of UCI carried by PUCCH 2 is higher than the priority of UCI carried by PUCCH 3 and PUCCH 4, and the priority of UCI carried by PUCCH 3 and PUCCH 4 is the same, then the overlap of PUCCH 2 and PUCCH 1 is processed first, and then the processing order is determined according to the starting time of PUCCH 3 and PUCCH 4. Assuming that the starting time of PUCCH 4 is earlier than the start symbol time of PUCCH 3, the overlap of PUCCH 4 and PUCCH 1 is processed.

In the above scheme 2), the processing order of PUCCH is first determined according to the starting time of PUCCH. If there are multiple PUCCHs with the same starting time, the processing order is determined according to the priority of UCI carried by each PUCCH with the same starting time. For example: PUCCH 1 overlaps with PUCCH 2, PUCCH 3, and PUCCH 4 in the time domain, and the starting time of PUCCH 2 is earlier than that of PUCCH 3 and PUCCH 4, and the starting time of PUCCH 3 and PUCCH 4 is the same, then the overlap of PUCCH 2 and PUCCH 1 is processed first, and then the processing order is determined according to the priority of UCI carried by PUCCH 3 and PUCCH 4. Assuming that the priority of UCI carried by PUCCH 3 is higher than the priority of UCI carried by PUCCH 4, the overlap of PUCCH 3 and PUCCH 1 is processed.

As an optional embodiment, when the PUCCHs are overlapped, the terminal determines the processing order for the PUCCHs according to the priorities of the UCI carried by the PUCCHs and/or the starting time of the PUCCHs, including at least one of the following:
Mode 1: When the first PUCCH with repetitions overlaps with M second PUCCHs, the processing order of the M second PUCCHs is determined according to the priorities of the UCIs carried by the M second PUCCHs and/or the starting time of the M second PUCCHs;
Mode 2: When there are N first PUCCHs with repetitions, the processing order of the first PUCCHs is determined according to the priority of the UCI carried by the first PUCCH and/or the starting time of the first PUCCH;
M and N are both greater than or equal to 2.

For the above-mentioned method 1, the first PUCCH is a PUCCH with repetitions, and the first PUCCH overlaps with multiple (M) second PUCCHs, where the multiple second PUCCHs may include PUCCHs with repetitions and/or non-PUCCHs with repetitions. The processing order of the M second PUCCHs is determined according to the priority of the UCI carried by the M second PUCCHs and/or the starting time of the second PUCCH. Optionally, in this embodiment, the processing order of the first PUCCH is not limited, that is, if there are multiple PUCCHs with repetitions, the processing order of the overlapping first PUCCHs can be determined in any order.

For example, there is overlap between PUCCH 1, PUCCH 2, PUCCH 3, and PUCCH 4, where PUCCH 1 and PUCCH 2 are both the first PUCCHs, and PUCCH 3 and PUCCH 4 are the second PUCCHs. When determining the processing order, the overlap of PUCCH 1 may be processed first, or the overlap of PUCCH 2 may be processed first. Assuming that the overlap of PUCCH 1 is processed first, it is determined according to the priority and/or starting time of the UCI carried by PUCCH 2, PUCCH 3, and PUCCH 4: which of PUCCH 2, PUCCH 3, and PUCCH 4 should be processed first to have an overlap with PUCCH 1. Assuming that the overlap of PUCCH 2 is processed first, it is determined according to the priority and/or starting time of the UCI carried by PUCCH 1, PUCCH 3 and PUCCH 4: which of PUCCH 1, PUCCH 3 and PUCCH 4 has the overlap problem with PUCCH 2 processed first.

For the above-mentioned method 2, the first PUCCH is a PUCCH for repeated transmission, including multiple first PUCCHs. In this case, the processing order of each first PUCCH overlapped with other PUCCHs is determined separately. Optionally, in this embodiment, the processing order of other PUCCHs overlapped with the first PUCCH is not limited, that is, if multiple PUCCHs overlap with one first PUCCH, the overlap with the first PUCCH can be processed in any order.

For example, there is overlap between PUCCH 1, PUCCH 2, PUCCH 3, and PUCCH 4, where PUCCH 1 and PUCCH 2 are both first PUCCHs, and PUCCH 3 and PUCCH 4 are second PUCCHs. When determining the processing order, it is determined according to the priority and/or starting time of the UCI carried by PUCCH 1 and PUCCH 2: whether to prioritize the overlap between PUCCH 1 and other PUCCHs or prioritize the overlap between PUCCH 2 and other PUCCHs.

Optionally, some of the N first PUCCHs have overlapped PUCCHs; or, each of the N first PUCCHs has overlapped PUCCHs.

In this embodiment, when there are N first PUCCHs with repetitions, the overlapping of the PUCCHs may include: some of the N first PUCCHs have overlapped PUCCHs, and it is necessary to perform de-overlapping processing on the first PUCCHs with overlapped PUCCHs; it may also include: each first PUCCH has overlapped PUCCHs, and it is necessary to perform de-overlapping processing on each first PUCCH.

It should be noted that, in this embodiment, when some of the N first PUCCHs have overlapped PUCCHs, determining the processing order for the first PUCCHs may include: determining the processing order for the first PUCCHs, and the first PUCCHs among the N first PUCCHs that do not have overlapped PUCCHs do not need to be de-overlapped.

Optionally, for the above-mentioned method 2, that is, when each of the N first PUCCHs has an overlapped PUCCH, there is at least one identical overlapped PUCCH between each of the N first PUCCHs.

That is, when there are multiple first PUCCHs, there is at least one identical PUCCH among the multiple PUCCHs overlapping each first PUCCH, for example: the first PUCCH includes PUCCH 1 and PUCCH 2, the multiple PUCCHs overlapped with PUCCH 1 are recorded as the first part PUCCH, and the multiple PUCCHs overlapped with PUCCH 2 are recorded as the second part PUCCH, and there is at least one identical PUCCH among the first part PUCCH and the second part PUCCH.

Optionally, the above-mentioned method 1 and method 2 may be used together to determine the processing order of the PUCCH. For example: if there are multiple first PUCCHs overlapped with other PUCCHs, and each first PUCCH has multiple overlapping second PUCCHs, then method 2 may be used to first determine the processing order of each first PUCCH, and when processing the overlapping problem of each first PUCCH, the processing order of each second PUCCH may be determined based on method 1.

Optionally, the starting time includes at least one of the following:
starting slot;
start sub-slot;
start symbol.

In this embodiment, when determining the processing order for the PUCCHs according to the starting time of the PUCCHs, it can be determined based on one or more of the starting slot, starting sub-slot and start symbol of the PUCCH. Among them, the processing order for the PUCCHs can be first determined based on the starting slot/sub-slot of each PUCCH; if multiple PUCCHs are in the same starting slot/sub-slot, the processing order for the PUCCHs can be determined based on the start symbol in the starting slot/sub-slot.

For example, if PUCCH 1, PUCCH 2, PUCCH 3, and PUCCH 4 overlap, and PUCCH 1 is a PUCCH with repetitions, then it is necessary to determine the processing order of the overlap between PUCCH 2, PUCCH 3, PUCCH 4 and PUCCH 1. If PUCCH 2, PUCCH 3, and PUCCH 4 are in the same slot, and the start symbol of PUCCH 4 is the earliest in the slot, then the overlap between PUCCH 4 and PUCCH 1 is processed first. If PUCCH 2 is also a PUCCH with repetitions, PUCCH 1, PUCCH 2, PUCCH 3, and PUCCH 4 overlap in slot n+1, the starting transmission of PUCCH 2 is in slot n, and the starting transmission of PUCCH 1 is in slot n+1, then the overlap between PUCCH 2 and other PUCCHs is processed first, and then the overlap between PUCCH 1 and other PUCCHs is processed.

In this embodiment, for the PUCCH with repetitions, the starting slot/sub-slot is the slot/sub-slot where the PUCCH with repetitions first appears; for the non-PUCCH with repetitions, the starting slot/sub-slot is the slot/sub-slot where the non-PUCCH with repetitions is located.

Optionally, after de-overlapping is performed on the PUCCH, there is no first PUCCH overlapped with other PUCCHs in the remaining PUCCHs.

In this embodiment, when multiple PUCCHs overlap, after the de-overlapping process for the PUCCHs according to the priorities of the UCI carried by the PUCCHs and/or the starting time of the PUCCHs, among the remaining PUCCHs, there is no overlap between the PUCCHs with repetitions and other PUCCHs, but there may be overlaps between multiple non-PUCCHs with repetitions. In this case, UCI multiplexing can be performed on multiple non-PUCCHs with repetitions. For example: PUCCH 1, PUCCH 2, PUCCH 3, and PUCCH 4 overlap, where PUCCH 1 is a PUCCH with repetitions. Assume that after de-overlapping, PUCCH 3 and PUCCH 4 remain. Although PUCCH 3 and PUCCH 4 overlap, since there is no PUCCH with repetitions, UCI multiplexing can be performed on PUCCH 3 and PUCCH 4. If PUCCH 1, PUCCH 2, and PUCCH 3 remain after the first de-overlapping process, further de-overlapping process is required because there is still overlap between the PUCCH with repetitions 1 and other PUCCHs, until there is no overlapped PUCCH or PUCCH 1 is discarded.

The following example illustrates the implementation process of the method for processing PUCCH overlap according to the embodiment of the present disclosure.

Example 1: Taking the overlap of a first PUCCH with repetitions and multiple second PUCCHs as an example, the processing order is determined from high to low priority of the UCI carried by each second PUCCH overlapped with the first PUCCH, and the overlap of the second PUCCH and the first PUCCH is resolved in sequence according to the determined processing order.

As shown in Figure 2, the first PUCCH with repetitions is PUCCH 1 carrying SR, and the second PUCCH overlapped with PUCCH 1 includes PUCCH 2 carrying HARQ-ACK and PUCCH 3 carrying CSI. According to the priority of UCI, HARQ-ACK has a higher priority than CSI, so the overlap between PUCCH 2 carrying HARQ-ACK and PUCCH 1 carrying SR is processed first. Since HARQ-ACK has a higher priority than SR, PUCCH 1 carrying SR is discarded, and the remaining PUCCH 2 carrying HARQ-ACK and PUCCH 3 carrying CSI still overlap and are not PUCCHs with repetitions, so PUCCH 2 and PUCCH 3 are multiplexed for UCI.

As shown in Figure 3, the first PUCCH for repeated transmission is PUCCH 1 carrying SR, and the second PUCCH overlapped with PUCCH 1 includes PUCCH 2 carrying HARQ-ACK and PUCCH 3 carrying CSI. According to the priority of UCI, HARQ-ACK has a higher priority than CSI, so the overlap between PUCCH 2 carrying HARQ-ACK and PUCCH 1 carrying SR is processed first. Since HARQ-ACK has a higher priority than SR, PUCCH 1 carrying SR is discarded, and the remaining PUCCH 2 carrying HARQ-ACK and PUCCH 3 carrying CSI do not overlap and do not need to be further processed.

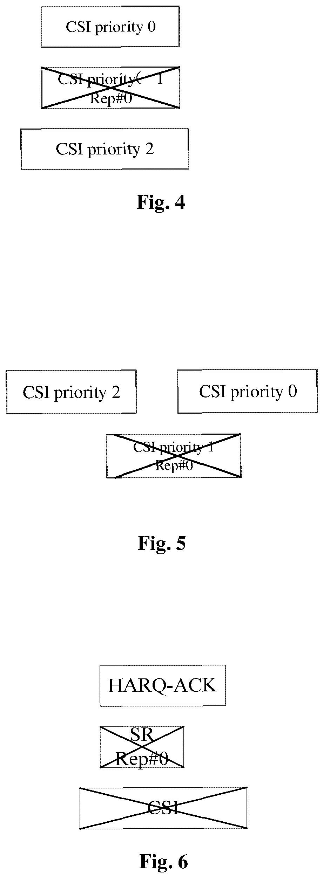

As shown in FIG4, the first PUCCH is PUCCH 1 carrying CSI priority 1, and the PUCCHs overlapped with PUCCH 1 include PUCCH 2 carrying CSI priority 0 and PUCCH 3 carrying CSI priority 2. According to the priority of UCI, CSI priority 0 is higher than CSI priority 2, so the overlap between PUCCH 2 carrying CSI priority 0 and PUCCH 1 is processed first. Since the priority of CSI priority 0 is higher than that of CSI priority 1, PUCCH 1 carrying CSI priority 1 is discarded. The remaining PUCCH 2 carrying CSI priority 0 and PUCCH 3 carrying CSI priority 2 still overlap, but they are both non-repeated transmissions, so UCI multiplexing is performed on PUCCH 2 and PUCCH 3.

As shown in Figure 5, the first PUCCH is PUCCH 1 carrying CSI priority 1, and the PUCCHs overlapped with PUCCH 1 include PUCCH 2 carrying CSI priority 0 and PUCCH 3 carrying CSI priority 2. According to the priority of UCI, CSI priority 0 is higher than CSI priority 2, so the overlap between PUCCH 2 carrying CSI priority 0 and PUCCH 1 is processed first. Since the priority of CSI priority 0 is higher than that of CSI priority 1, PUCCH 1 carrying CSI priority 1 is discarded. The remaining PUCCH 2 carrying CSI priority 0 and PUCCH 3 carrying CSI priority 2 do not overlap and do not need to be further processed.

Example 2: Taking the overlap of a first PUCCH with repetitions with multiple second PUCCHs as an example, the processing order is determined based on the starting time of each second PUCCH overlapped with the first PUCCH from early to late, and the overlap of the second PUCCH and the first PUCCH is resolved in sequence according to the determined processing order.

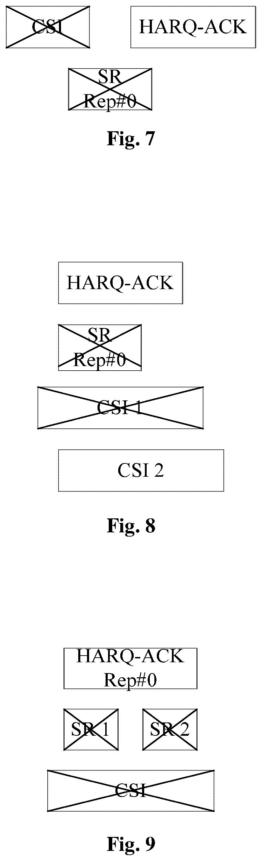

As shown in Figures 6 and 7, the first PUCCH with repetitions is PUCCH 1 carrying SR, and the second PUCCH that overlaps with PUCCH 1 includes PUCCH 2 carrying HARQ-ACK and PUCCH 3 carrying CSI. According to the start symbols of PUCCH 2 and PUCCH 3, the start symbol of PUCCH 3 carrying CSI is earlier, so the overlap between PUCCH 3 carrying CSI and PUCCH 1 carrying SR is preferentially processed. Since the priority of SR is higher than that of CSI, PUCCH 3 carrying CSI is discarded, and the remaining PUCCH 2 carrying HARQ-ACK and PUCCH 1 carrying SR still overlap and PUCCH 1 is a PUCCH with repetitions. Since the priority of HARQ-ACK is higher than that of SR, PUCCH 1 carrying SR is discarded.

Example 3: Taking the overlap of a first PUCCH with repetitions and multiple second PUCCHs as an example, the processing order is determined based on the priority of the UCI carried by each second PUCCH overlapped with the first PUCCH and the starting time of each second PUCCH, and the overlap of the second PUCCH and the first PUCCH is resolved in sequence according to the determined processing order.

As shown in FIG.8, the third processing order is first determined according to the order of the start symbol of the PUCCH from early to late, and then the fourth processing order is determined according to the descending order of the priority of the UCI carried by the second PUCCH. In FIG8, the first PUCCH is PUCCH 1 carrying SR, and the PUCCHs overlapped with PUCCH 1 include PUCCH 2 carrying HARQ-ACK, PUCCH 3 carrying CSI 1, and PUCCH 4 carrying CSI 2. According to the start symbol of the PUCCH, the overlap between PUCCH 3 carrying CSI 1 and PUCCH 1 carrying SR is first processed, and the priority of SR is higher than that of CSI 1, so PUCCH 3 carrying CSI 1 is discarded. The remaining PUCCH 1 carrying SR, PUCCH 2 carrying HARQ-ACK, and PUCCH 4 carrying CSI 2 need further de-overlapping processing. Since the start symbols of PUCCH 1, PUCCH 2, and PUCCH 4 are the same, the PUCCH that needs to be discarded is further determined according to the priority of carrying UCI. Since the priority of HARQ-ACK is higher than that of CSI 2, the overlap between PUCCH 2 carrying HARQ-ACK and PUCCH 1 carrying SR is processed first. Since the priority of HARQ-ACK is higher than that of SR, PUCCH 1 carrying SR is discarded. There is no repeated transmission of PUCCH between the remaining PUCCH 2 carrying HARQ-ACK and PUCCH 4 carrying CSI 2, so UCI multiplexing is performed on PUCCH 2 and PUCCH 4.

As shown in Figure 9, the first PUCCH is PUCCH 1 carrying HARQ-ACK, and the PUCCHs overlapped with the first PUCCH are: PUCCH 2 carrying SR1, PUCCH 3 carrying SR 2, and PUCCH 4 carrying CSI. If the processing order is determined based on the priority of UCI first, then: the priority of SR is higher than the priority of CSI, so the overlap between PUCCH carrying SR and PUCCH 1 carrying HARQ-ACK is processed first; since PUCCH 2 carrying SR1 and PUCCH 3 carrying SR 2 have the same priority, and the start symbol of PUCCH 2 carrying SR1 is earlier than the start symbol of PUCCH 3 carrying SR 2, the overlap between PUCCH 2 carrying SR1 and PUCCH 1 carrying HARQ-ACK is processed first, so the processing order is: PUCCH 2 carrying SR1, PUCCH 3 carrying SR 2, and PUCCH 4 carrying CSI.

For Figure 9, if the processing order is determined based on the start symbol first, then: the start symbol of PUCCH 4 carrying CSI is the earliest, so the overlap between PUCCH 4 carrying CSI and PUCCH 1 carrying HARQ-ACK is processed first; since PUCCH 2 carrying SR1 and PUCCH 3 carrying SR 2 have the same priority, and the start symbol of PUCCH 2 carrying SR1 is earlier than the start symbol of PUCCH 3 carrying SR 2, the overlap between PUCCH 2 carrying SR1 and PUCCH 1 carrying HARQ-ACK is processed first, so the processing order is: PUCCH 4 carrying CSI, PUCCH 2 carrying SR1, PUCCH 3 carrying SR 2.

Optionally, for the above examples 1 to 3, if the result of whether to discard the PUCCH with repetitions obtained by de-overlapping the first PUCCH with repetitions with different overlapped PUCCHs is the same, it can be stipulated that the processing order is determined by the terminal itself, and the final result at this time will not change due to different processing orders. For example: the UCI priorities carried by multiple second PUCCHs overlapped with the first PUCCH are all higher or all lower than the UCI priority carried by the first PUCCH. As shown in Figure 9, the first PUCCH is PUCCH 1 carrying HARQ-ACK, and the PUCCHs overlapped with the first PUCCH are: PUCCH 2 carrying SR1, PUCCH 3 carrying SR 2, and PUCCH 4 carrying CSI, and their UCI priorities are all lower than HARQ-ACK. Regardless of the order in which the overlap with PUCCH 1 carrying HARQ-ACK is processed, the final result is to discard two SRs and CSI (i.e., discard PUCCH 2, PUCCH 3, and PUCCH 4), and only transmit HARQ-ACK (i.e., PUCCH 1).

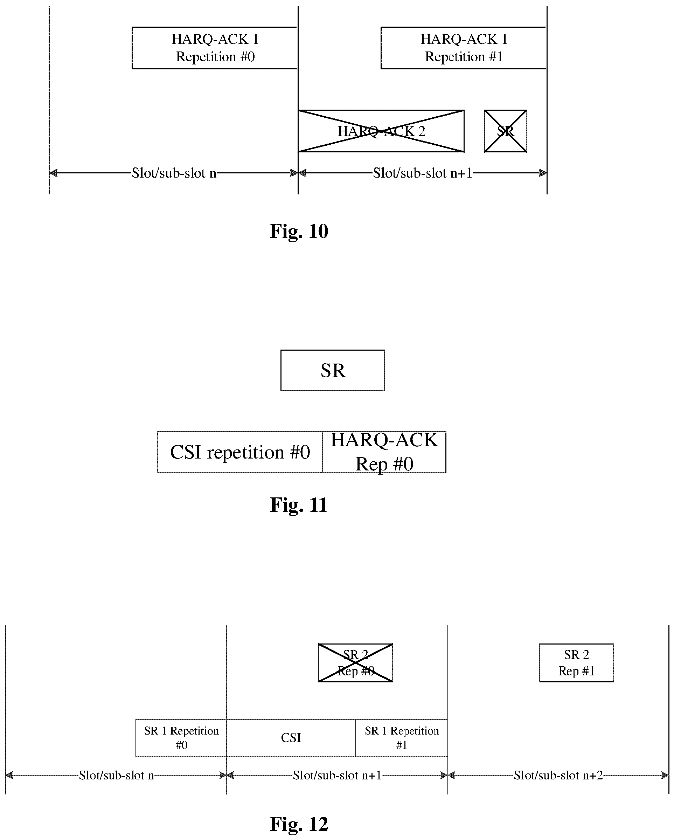

As shown in Figure 10, in slot/sub-slot n+1, the first PUCCH is PUCCH 1 carrying repeated transmission of HARQ-ACK1, and the PUCCHs overlapped with the first PUCCH are: PUCCH 2 carrying HARQ-ACK 2 and PUCCH 3 carrying SR. Regardless of whether the overlap of HARQ-ACK 1 and HARQ-ACK 2 is processed first or the overlap of HARQ-ACK 1 and SR is processed first, the result is that HARQ-ACK 1 is retained. Therefore, regardless of the processing order, the final result is that only HARQ-ACK 1 is transmitted in slot/sub-slot n+1.

Example 4: Taking the overlap of multiple first PUCCHs with repetitions with other PUCCHs as an example, the processing order for each first PUCCH is determined based on the priority of the UCI carried by each first PUCCH or the starting time of each first PUCCH, and the overlap of the first PUCCH with other PUCCHs is resolved in turn according to the determined processing order.

As shown in Figure 11, the first PUCCH with repetitions includes PUCCH 1 carrying CSI and PUCCH 2 carrying HARQ-ACK, and both PUCCH 1 and PUCCH 2 overlap with PUCCH 3 carrying SR. The processing order is determined based on the priority of carrying UCI: since the priority of HARQ-ACK is higher than the priority of CSI, the overlap between PUCCH 2 carrying HARQ-ACK and PUCCH 3 carrying SR is processed first, and since the priority of HARQ-ACK is higher than the priority of SR, PUCCH 3 carrying SR is discarded. The remaining PUCCH 1 carrying CSI and PUCCH 2 carrying HARQ-ACK do not overlap and do not need further processing.

For Figure 11, the processing order is determined based on the starting time of each first PUCCH: since the start symbol of PUCCH 1 carrying CSI is earlier than that of PUCCH 2 carrying HARQ-ACK, the overlap between PUCCH 1 carrying CSI and PUCCH 3 carrying SR is prioritized. Since the priority of SR is changed to the priority of CSI, PUCCH 1 carrying CSI is discarded. If there is still overlap between the remaining PUCCH 2 carrying HARQ-ACK and PUCCH 3 carrying SR and there are PUCCHs that are transmitted repeatedly, PUCCH 3 carrying SR is discarded according to the priority of UCI, and only HARQ-ACK is transmitted.

As shown in Figure 12, for slot/sub-slot n+1, there is an overlap between PUCCH 1 carrying SR 2, PUCCH 2 carrying CSI, and PUCCH 3 carrying SR 1, where PUCCH 1 carrying SR 2 and PUCCH 3 carrying SR 1 are both PUCCHs with repetitions. Since SR 1 and SR 2 have the same priority, the processing order can be determined based on the starting slot/sub-slot: the starting slot/sub-slot of PUCCH 3 carrying SR 1 (slot/sub-slot n) is earlier than the starting slot/sub-slot of PUCCH 1 carrying SR 2 (slot/sub-slot n+1), then the overlap of PUCCH 3 carrying SR 1 is processed first. Since PUCCH 3 carrying SR 1 only overlaps with PUCCH 1 carrying SR 2, the PUCCH to be discarded is determined according to the early or late starting slot, and PUCCH 1 carrying SR 2 is discarded.

Example 5. In a slot/sub-slot, there are multiple PUCCHs with repetitions (i.e., multiple first PUCCHs), and for one or more of the PUCCHs with repetitions, there are multiple overlapped PUCCHs. The processing order of the PUCCHs with repetitions can be first determined according to the UCI priority carried by the multiple PUCCHs with repetitions and/or the starting time of the PUCCHs, and then for each PUCCH with repetitions, the processing order of the overlapping multiple PUCCHs can be determined according to the UCI priority carried by the multiple overlapped PUCCHs and/or the starting time of the PUCCHs.

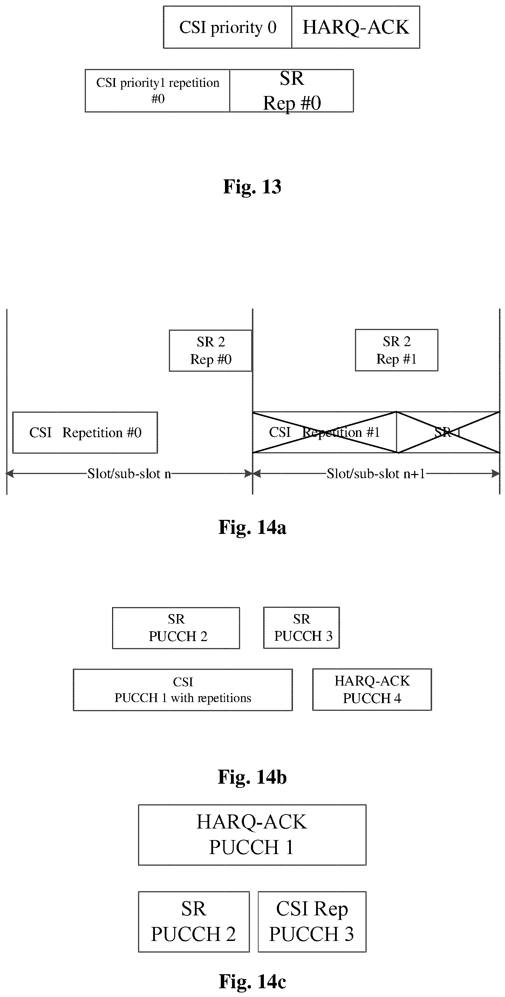

As shown in FIG13, the first PUCCH with repetitions includes PUCCH 1 carrying CSI priority 1 and PUCCH 2 carrying SR. Both PUCCH 1 and PUCCH 2 overlap with PUCCH 3 carrying CSI priority 0. PUCCH 2 also overlaps with PUCCH 4 carrying HARQ-ACK.

Assuming that the processing order between PUCCHs with repetitions is determined according to the starting time, and the processing order between the same PUCCH with repetitions and multiple PUCCHs overlapped with it is determined based on the priority of UCI, then for Figure 13: the start symbol of PUCCH 1 carrying CSI priority 1 is earlier than the start symbol of PUCCH 2 carrying SR, then the overlap between PUCCH 1 carrying CSI priority 1 and PUCCH 3 carrying CSI priority 0 is prioritized, and since the priority of CSI priority 0 is higher than the priority of CSI priority 1, PUCCH 1 carrying CSI priority 1 is discarded; then the overlap between PUCCH 2 carrying SR, PUCCH 3 carrying CSI priority 0, and PUCCH 4 carrying HARQ-ACK is processed, and since the priority of HARQ-ACK is higher than CSI priority 0, the overlap between PUCCH 2 carrying SR and PUCCH 4 carrying HARQ-ACK is prioritized, and since the priority of HARQ-ACK is higher than SR, PUCCH 2 carrying SR is discarded. The remaining PUCCH 3 carrying CSI priority 0 and PUCCH 4 carrying HARQ-ACK do not overlap and do not require further processing.

Assuming that the processing order between PUCCHs with repetitions is determined based on the priority of UCI, and the processing order between the same PUCCH with repetitions and multiple PUCCHs overlapping therewith is determined based on the starting time, then for Figure 13: Since the priority of SR is higher than the priority of CSI priority 1, the overlap between PUCCH 2 carrying SR and PUCCH 3 carrying CSI priority 0 and PUCCH 4 carrying HARQ-ACK is preferentially processed. Since the start symbol of PUCCH 3 carrying CSI priority 0 is earlier than the start symbol of PUCCH 4 carrying HARQ-ACK, the overlap between PUCCH 3 carrying CSI priority 0 and PUCCH 2 carrying SR is preferentially processed. Since the priority of SR is higher than the priority of CSI priority 0, PUCCH 3 carrying CSI priority 0 is discarded. Then, the overlap between PUCCH 2 carrying SR and PUCCH 4 carrying HARQ-ACK is processed. Since the priority of HARQ-ACK is higher than the priority of SR, the PUCCH carrying SR is discarded. There is no overlap between the remaining PUCCH 1 carrying CSI priority 1 and PUCCH 4 carrying HARQ-ACK, so no further processing is required, and CSI priority 1 and HARQ-ACK are transmitted.

Example 6: When determining the processing order for the PUCCHs according to an order from the PUCCH with an early starting time to the PUCCH with a late starting time, first determine the processing order for the PUCCHs according to the starting slot/sub-slot. If the starting slot of the PUCCH is the same, determine the processing order according to the start symbol in the same slot.

As shown in FIG. 14a, in slot/sub-slot n+1, PUCCH 1 carrying SR 2, PUCCH 2 carrying CSI, and PUCCH 3 carrying SR1 overlap, where PUCCH 1 carrying SR2 and PUCCH 2 carrying CSI are both PUCCHs with repetitions, and the processing order of PUCCH 1 and PUCCH 2 can be determined based on the starting time. First, the processing order is determined based on the starting slot. The starting slot/sub-slot of PUCCH 1 carrying SR 2 and PUCCH 2 carrying CSI is n, and the processing order needs to be determined based on the start symbol in slot/sub-slot n+1. Since the start symbol of PUCCH 1 carrying SR2 is later than the start symbol of PUCCH 2 carrying CSI, the overlap of PUCCH 2 carrying CSI is processed first. PUCCH 2 carrying CSI overlaps with PUCCH 1 carrying SR 2. PUCCH 2 carrying CSI is discarded based on the priority of CSI and SR. The remaining PUCCH 1 carrying SR 2 and PUCCH 3 carrying SR1 have the same priority. If the starting slot/sub-slot of PUCCH 1 carrying SR 2 is earlier, PUCCH 3 carrying SR 1 is discarded.

Example 7: Take solving PUCCH overlap in a PUCCH candidate set as an example.

Step 1: In a PUCCH candidate set, a first PUCCH is determined according to a priority of UCI and/or a starting time of the PUCCHs, and a second PUCCH overlapped with the first PUCCH is determined in the PUCCH candidate set.

Optionally, the PUCCH candidate set initially includes: all PUCCHs with repetitions in a slot/sub-slot, or PUCCHs with repetitions with overlapped PUCCHs.

The second PUCCH is all PUCCHs in the slot/sub-slot that overlap with the first PUCCH. The first PUCCH and the second PUCCH constitute a PUCCH subset.

Step 2: Process the overlap between the PUCCH with repetitions and other PUCCHs in the PUCCH subset.

If there are multiple second PUCCHs, that is, multiple second PUCCHs overlap with the first PUCCH, the multiple second PUCCHs that overlap with the first PUCCH are processed in pairs in sequence according to the priority of UCI and/or the starting time of PUCCH until there is no PUCCH overlapped with the first PUCCH.

Step 3: Update the PUCCH candidate set, and determine whether to execute step 1 or end the process according to the updated PUCCH candidate set.

Optionally, the updating the PUCCH candidate set may include: the UE deleting the first PUCCH from the PUCCH candidate set to obtain an updated PUCCH candidate set;

If the updated PUCCH candidate set is empty, or each PUCCH in the updated PUCCH candidate set does not have an overlapped PUCCH, the process ends; otherwise, return to step 1.

Example 8: For steps 1 and 2 of the above example 7, Example 8 of the present disclosure uses the "according to the priority of UCI and/or the starting time of PUCCH "as follows: first, in order of UCI priority from high to low, and for the case where the UCI priority is the same, in order of the starting slot/sub-slot from early to late, to illustrate the execution process of resolving PUCCH overlap in the PUCCH candidate set.

The PUCCH candidate set initially includes: all PUCCHs with repetitions in a slot/sub-slot, or PUCCHs with repetitions with overlapped PUCCHs.

Step a: In the PUCCH candidate set, determine the first PUCCH as the PUCCH with the highest UCI priority in the PUCCH candidate set. If there are multiple PUCCHs with the same UCI priority, the first PUCCH is the PUCCH with the earliest starting slot/sub-slot. If there are multiple PUCCHs with the same UCI priority and the same starting slot/sub-slot, the first PUCCH is any one of them.

The second PUCCH is all PUCCHs in the slot/sub-slot that overlap with the first PUCCH. The first PUCCH and the second PUCCH constitute a PUCCH subset.

Step b: Process the overlap between the first PUCCH and other PUCCHs.
there are multiple second PUCCHs, that is, multiple second PUCCHs overlap with the first PUCCH, a target PUCCH is determined from the multiple second PUCCHs, and the target PUCCH is the PUCCH with the highest UCI priority among the multiple second PUCCHs; if there are multiple second PUCCHs with the same UCI priority, the target PUCCH is the PUCCH with the earliest starting slot/sub-slot. If there are multiple second PUCCHs with the same UCI priority and the same starting slot/sub-slot, the target PUCCH is any one of them.

If the UCI priorities of the first PUCCH and the target PUCCH are different, the PUCCH with the lower priority is discarded; if the UCI priorities of the first PUCCH and the target PUCCH are the same, the PUCCH with a later starting slot/sub-slot is discarded.

The target PUCCH is deleted from the second PUCCH. If the second PUCCH is not empty, the next target PUCCH is determined according to the above process, and the overlap between the target PUCCH and the first PUCCH is resolved until there is no PUCCH overlapped with the first PUCCH.

Step c: Update the PUCCH candidate set, and determine whether to execute step 1 or end the process according to the updated PUCCH candidate set.

Optionally, the first PUCCH is deleted from the PUCCH candidate set to obtain an updated PUCCH candidate set. If the updated PUCCH candidate set is empty or each PUCCH in the updated PUCCH candidate set does not have an overlapped PUCCH, the process ends; otherwise, return to step a.

As an optional embodiment, the method further includes:
repeat the following steps until no PUCCH with repetitions overlaps with other PUCCHs in the slot or sub-slot where the PUCCH is located:
In the case of overlap of PUCCHs, the terminal determines a processing order for the PUCCHs according to the priorities of the UCI carried by the PUCCHs and/or the starting time of the PUCCHs; and performs de-overlapping processing on the PUCCHs according to the processing order.

In this embodiment, the terminal repeatedly executes the execution process of the method for processing overlap of the physical uplink control channel of the embodiment of the present disclosure until there is no overlap between the PUCCH with repetitions and other PUCCHs in the slot or sub-slot where the PUCCH is located. That is, in the embodiment of the present disclosure, the final result obtained after the PUCCH is processed is: there is no overlap between the PUCCH with repetitions and other PUCCHs in the remaining PUCCHs in the slot or sub-slot.

As an optional embodiment, when the PUCCHs are overlapped, the terminal determines the processing order for the PUCCHs according to the priority of the uplink control information (UCI) carried by the PUCCHs and/or the starting time of the PUCCHs, including:
determine a third PUCCH according to the priorities of the UCI carried by the PUCCHs and/or the starting time of the PUCCHs;
when there is an overlapping fourth PUCCH with the third PUCCH, and there is a PUCCH with repetitions between the third PUCCH and the fourth PUCCH, it is determined to perform de-overlapping processing between the PUCCH with repetitions and other PUCCHs; where the third PUCCH is a PUCCH with repetitions or a non-PUCCH with repetitions.

In this embodiment, when determining the processing order for PUCCH, a third PUCCH can be first determined based on the priorities of the UCI carried by the PUCCHs and/or the starting time of the PUCCHs. The third PUCCH can be a PUCCH with repetitions or a PUCCH without repetitions. The de-overlapping processing order is determined based on the overlapping situation of the third PUCCH. Among them, if there is an overlapped PUCCH in the third PUCCH, that is, the fourth PUCCH, and there is a PUCCH with repetitions in the third PUCCH and the fourth PUCCH, the overlapping problem between the PUCCH with repetitions and other PUCCHs is processed. Among them, the fourth PUCCH can include multiple PUCCHs.

As an optional embodiment, determining the third PUCCH according to the priorities of the UCI carried by the PUCCHs and/or the starting time of the PUCCHs includes:
Step 1: determining the third PUCCH from the first PUCCH candidate set according to the priorities of the UCI carried by the PUCCHs and the starting time of the PUCCHs;
The method further includes:
   Step 2: determining the fourth PUCCH from the first PUCCH candidate set; the third PUCCH and the fourth PUCCH constitute a second PUCCH candidate set;
   performing the de-overlapping processing between the PUCCH with repetitions and other PUCCHs, including:
      Step 3: performing the de-overlapping processing for the PUCCH with repetitions and other PUCCHs in the second PUCCH candidate set;
      The method further includes:
         Step 4: updating the first PUCCH candidate set to obtain a third PUCCH candidate set; determine to execute step 1 or end according to the third PUCCH candidate set.

In this embodiment, when performing de-overlapping processing, the third PUCCH is determined from the first PUCCH candidate set, and the fourth PUCCH is determined from the first PUCCH candidate set; the fourth PUCCH is a PUCCH in the first PUCCH candidate set that overlaps with the third PUCCH. The third PUCCH and the fourth PUCCH constitute a second PUCCH candidate set.

De-overlapping is performed on the PUCCH with repetitions and other PUCCHs in the second PUCCH candidate set, and the first PUCCH candidate set is updated after the de-overlapping process to obtain a third PUCCH candidate set. Since after each de-overlapping process, there may still be overlaps between the PUCCH with repetitions and other PUCCHs, it is necessary to determine whether to execute step 1 or end according to the third PUCCH candidate set.

Optionally, if there is no overlap between the PUCCH with repetitions and other PUCCHs in the third PUCCH candidate set obtained after de-overlapping, the processing ends; if there is still overlap between the PUCCH with repetitions and other PUCCHs, step 1 is repeated.

It should be noted that when step 1 is repeatedly executed, the third PUCCH candidate set is the first PUCCH candidate set. Taking the repeated execution of step one as an example, it includes: step one: determining the third PUCCH from the third PUCCH candidate set according to the priorities of the UCI carried by the PUCCHs and the starting time of the PUCCHs; step two: determining the fourth PUCCH from the third PUCCH candidate set; the third PUCCH and the fourth PUCCH constitute the second PUCCH candidate set; step three: de-overlapping the PUCCH with repetitions in the second PUCCH candidate set with other PUCCHs; step four: updating the third PUCCH candidate set to obtain an updated third PUCCH candidate set; determining whether to execute step one or end according to the updated third PUCCH candidate set.

Optionally, the first PUCCH candidate set initially includes: all PUCCHs in a slot or a sub-slot; or, all PUCCHs with repetitions in a slot or a sub-slot and PUCCHs overlapped with the PUCCHs with repetitions.

As an optional embodiment, determining the third PUCCH from the first PUCCH candidate set according to the priorities of the UCI carried by the PUCCHs and the starting time of the PUCCHs includes one of the following methods:
Method 1: Determine the third PUCCH as the PUCCH with the highest UCI priority in the first PUCCH candidate set; if there are multiple PUCCHs with the highest UCI priority in the first PUCCH candidate set, determine the third PUCCH as: the PUCCH with the earliest start symbol among the multiple PUCCHs with the highest UCI priority.

In the first mode, the third PUCCH is a PUCCH with the highest UCI priority in the first PUCCH candidate set. If there are multiple PUCCHs with the same UCI priority, the third PUCCH is a PUCCH with the earliest start symbol.

Optionally, if there are multiple PUCCHs with the same UCI priority and the same start symbol, the third PUCCH can be any one of them; or the third PUCCH is a PUCCH with the largest number of symbols; or, if there are multiple PUCCHs with the same UCI priority, the same start symbol and the same number of PUCCH symbols, the third PUCCH is any one of them.

Method 2: Determine the third PUCCH as the PUCCH with the earliest start symbol in the first PUCCH candidate set; if the first PUCCH candidate set has multiple PUCCHs with the earliest start symbols, determine the third PUCCH as: the PUCCH with the highest UCI priority among the multiple PUCCHs with the earliest start symbols.

In the second mode, the third PUCCH is a PUCCH with the earliest start symbol in the first PUCCH candidate set. If there are multiple PUCCHs with the same start symbol, the third PUCCH is a PUCCH with the highest UCI priority.

Optionally, if there are multiple PUCCHs with the same UCI priority and the same start symbol, the third PUCCH is any one of them; or the first PUCCH is the PUCCH with the largest number of symbols; or, if there are multiple PUCCHs with the same UCI priority, the same start symbol and the same number of PUCCH symbols, the third PUCCH is any one of them.

Method 3: Determine that the third PUCCH is the PUCCH with the highest UCI priority in the first PUCCH candidate set; if there are multiple PUCCHs with the highest UCI priority in the first PUCCH candidate set, determine that the third PUCCH is the PUCCH with the earliest starting slot or sub-slot among the multiple PUCCHs with the highest UCI priority.

In the third mode, the third PUCCH is a PUCCH with the highest UCI priority in the first PUCCH candidate set. If there are multiple PUCCHs with the same UCI priority, the third PUCCH is a PUCCH with the earliest starting slot/sub-slot.

Optionally, the determining the third PUCCH from the first PUCCH candidate set according to the priorities of the UCI carried by the PUCCHs and the starting time of the PUCCHs further includes:
when the third PUCCH is determined according to the third mode, if there are multiple PUCCHs with the highest UCI priority and the earliest starting slot or sub-slot in the first PUCCH candidate set, it is determined that the third PUCCH is one of the following:
any one of the multiple PUCCHs with the highest UCI priority and the earliest starting slot or sub-slot;
The PUCCH with the earliest start symbol among the multiple PUCCHs with the highest UCI priority and the earliest starting slot or sub-slot.

In this embodiment, for the third method of determining the third PUCCH, if there are multiple PUCCHs with the earliest UCI priority and the earliest starting slot/sub-slot in the first PUCCH candidate set, it can be determined that the third PUCCH is any one of them; or, the third PUCCH is determined to be a PUCCH with the earliest start symbol among multiple PUCCHs with the highest UCI priority and the earliest starting slot/sub-slot.

Optionally, if there are multiple PUCCHs with the same UCI priority, the same starting slot/sub-slot and the same start symbol, the third PUCCH is any one of them; or the third PUCCH is the PUCCH with the largest number of symbols. If there are multiple PUCCHs with the same UCI priority, the same start symbol and the same number of PUCCH symbols, the third PUCCH is any one of them.

As an optional embodiment, determining the third PUCCH from the first PUCCH candidate set further includes:

If the number of the third PUCCHs determined according to the method 1, the method 2 or the method 3 is X, and X is greater than 1, selecting one of the target PUCCHs as the third PUCCH;

The target PUCCH is one of the following:
Any one of the X PUCCHs;
The PUCCH with the longest duration among the X PUCCHs;
Any one of the PUCCHs with the longest duration among the X PUCCHs.

In this embodiment, when the third PUCCH is determined from the first PUCCH candidate set using method 1, method 2 or method 3, if the number of third PUCCHs obtained is greater than 1, that is, there are multiple third PUCCHs, it is necessary to determine one of the PUCCHs as the final third PUCCH. Specifically, it can be determined that the final third PUCCH is any one of them; or, it can be determined that the final third PUCCH is the PUCCH with the longest duration (for example, the largest number of symbols); or, if there are multiple PUCCHs with the longest duration, it can be determined that the final third PUCCH is any one of them.

Optionally, when performing de-overlapping processing, if the fourth PUCCH does not exist, that is, there is no PUCCH overlapped with the third PUCCH in the first PUCCH candidate set, or there is no PUCCH with repetitions in the third PUCCH and the fourth PUCCH, the step of "updating the first PUCCH candidate set" is directly performed.

As an optional embodiment, the de-overlapping processing of the PUCCH with repetitions and other PUCCHs in the second PUCCH candidate set includes one of the following methods:
Method 1: discarding all PUCCHs except the fifth PUCCH in the second PUCCH candidate set; where the fifth PUCCH is the PUCCH with the highest UCI priority in the second PUCCH candidate set; if there are multiple PUCCHs with the highest UCI priority in the second PUCCH candidate set, then the fifth PUCCH is the earliest PUCCH in the starting slot or sub-slot among the multiple PUCCHs with the highest UCI priority.

In the first approach, a fifth PUCCH is determined in a second PUCCH candidate set consisting of a third PUCCH and a fourth PUCCH, and all other PUCCHs except the fifth PUCCH in the second PUCCH candidate set are discarded.

The fifth PUCCH is a PUCCH with the highest UCI priority in the second PUCCH candidate set; if there are multiple PUCCHs with the same UCI priority, the fifth PUCCH is a PUCCH with the earliest starting slot/sub-slot.

Method 2: discarding all fourth PUCCHs in the second PUCCH candidate set; or, if the third PUCCH is a PUCCH with repetitions, discard all fourth PUCCHs in the second PUCCH candidate set; otherwise, discard all PUCCHs with repetitions in the second PUCCH candidate set.

In the method 2, the fourth PUCCH is discarded. Optionally, all fourth PUCCHs in the second PUCCH candidate set may be discarded; or, if the third PUCCH is a PUCCH with repetitions, all fourth PUCCHs in the second PUCCH candidate set are discarded, otherwise, all PUCCHs with repetitions in the second PUCCH candidate set are discarded.

Method 3: For multiple PUCCHs with repetitions in the second PUCCH set, de-overlapping processing is performed in sequence according to the priority and/or starting time of the UCI carried by the PUCCH with repetitions; for multiple PUCCHs overlapped with a PUCCH with repetitions, de-overlapping processing is performed in sequence according to the priority of the UCI carried by the multiple PUCCHs and/or the starting time of the PUCCHs.

In method 3, for all the PUCCHs with repetitions in the second PUCCH set, the overlap between the PUCCH with repetitions and other PUCCHs is processed in sequence according to the priority of the UCI and/or the starting time of the PUCCHs, until all the PUCCHs with repetitions have no overlapped PUCCHs. For multiple PUCCHs overlapped with a specific PUCCH with repetitions, the overlap with the specific PUCCH with repetitions is processed in sequence according to the priority of the UCI and/or the starting time of the PUCCHs.

The PUCCH with a lower priority is discarded in the two PUCCHs. If the priorities are the same, the PUCCH with a later starting slot/sub-slot is discarded.

Optionally, the above starting time is a start symbol or a starting slot/sub-slot of PUCCH.

The following example illustrates the implementation process of de-overlapping the PUCCH with repetitions and other PUCCHs in the second PUCCH candidate set:
For example, for all the PUCCHs with repetitions in the second PUCCH set, record them as PUCCH 1 set:
a: Determine a PUCCH 1 and a PUCCH 2 overlapped with PUCCH 1 according to the priority of the UCI and/or the starting time of the PUCCHs;
b: If there are multiple PUCCH 2s, one PUCCH 3 is determined from the multiple PUCCH 2s according to the priority of the UCI and/or the starting time of the PUCCHs; if there is only one PUCCH 2, the one PUCCH 2 is PUCCH 3;
c: For PUCCH 1 and PUCCH 3, discard the PUCCH with lower priority. If the priorities are the same, discard the PUCCH with later starting slot/sub-slot;
d: Delete PUCCH 3 from PUCCH 2. If PUCCH 2 is empty, proceed to the next step; otherwise, return to step b;
e: Delete PUCCH 1 from the PUCCH 1 set. If the PUCCH 1 set is empty, end the third method; otherwise, execute step a.

As an optional embodiment, the updating the first PUCCH candidate set includes at least one of the following:
1) If the fourth PUCCH does not exist in the first PUCCH candidate set, deleting the third PUCCH from the first PUCCH candidate set.
   In this embodiment, if the fourth PUCCH does not exist in the first PUCCH candidate set, that is, there is no PUCCH in the first PUCCH candidate set that overlaps with the third PUCCH, the third PUCCH is deleted from the first PUCCH candidate set.
2) If there is no PUCCH with repetitions in the second PUCCH candidate set, deleting the third PUCCH from the first PUCCH candidate set.
   In this embodiment, if there is no PUCCH with repetitions in the third PUCCH and the fourth PUCCH, the third PUCCH is deleted from the PUCCH candidate set.
3) Deleting the discarded PUCCH from the first PUCCH candidate set.
4) deleting the PUCCHs that are not transmitted repeatedly and do not overlap with the PUCCHs that are transmitted repeatedly in the first PUCCH candidate set;
5) If the step of de-overlapping the PUCCH with repetitions and other PUCCHs in the second PUCCH candidate set is performed according to the second approach, the third PUCCH is deleted from the first PUCCH candidate set.

As an optional embodiment, determining to execute step 1 or to end according to the third PUCCH candidate set includes one of the following:
If the third PUCCH candidate set is not empty, then execute step 1; otherwise, end;
If there is only one PUCCH in the third PUCCH candidate set, then end; otherwise, execute the step 1;
If there is no PUCCH in the third PUCCH candidate set that overlaps with the PUCCH with repetitions, the process ends; otherwise, the process proceeds to step 1.

The implementation process of the method for processing the overlap of the physical uplink control channels is described below by using a specific example.

Example 9: Assume that in a slot/sub-slot there is PUCCH 1 carrying CSI, PUCCH 2 and PUCCH 3 carrying SR, and PUCCH 4 carrying HARQ-ACK, where PUCCH 1 is a PUCCH with repetitions, and PUCCH 2, PUCCH 3 and PUCCH 4 are PUCCHs without repetitions, as shown in Figure 14b.

The above process is described below by taking the initial first PUCCH candidate set being all PUCCHs in a slot/sub-slot as an example.

The initial first PUCCH candidate set is {PUCCH 1, PUCCH 2, PUCCH 3, PUCCH 4}.

Case 1: Assume that in step 1 (ie, determining the third PUCCH from the first PUCCH candidate set according to the priorities of the UCI carried by the PUCCHs and the starting time of the PUCCHs), the third PUCCH is determined according to method 1 or method 3.

### The method includes:

1) The UE executes step 1 (i.e., determines the third PUCCH from the first PUCCH candidate set according to the priorities of the UCI carried by the PUCCHs and the starting time of the PUCCHs), and determines that the third PUCCH is PUCCH 4; and executes step 2 (i.e., determines the fourth PUCCH from the first PUCCH candidate set), and determines that the fourth PUCCH is PUCCH 3.
   The UE determines the third PUCCH. Specifically, if the third PUCCH is determined according to method 1, the third PUCCH is the PUCCH with the highest UCI priority in the first PUCCH candidate set, if there are multiple PUCCHs with the same UCI priority, and the third PUCCH is the PUCCH with the earliest start symbol, then the UE determines that PUCCH 4 carrying HARQ-ACK is the third PUCCH. If the third PUCCH is determined according to method 3, the third PUCCH is the PUCCH with the highest UCI priority in the first PUCCH candidate set, if there are multiple PUCCHs with the same UCI priority, and the third PUCCH is the PUCCH with the earliest starting slot/sub-slot, then the UE determines that PUCCH 4 carrying HARQ-ACK is the third PUCCH. The UE determines that the fourth PUCCH overlapped with the third PUCCH is PUCCH 3.
2) The UE skips step 3 (i.e., performing de-overlapping processing on the PUCCH with repetitions in the second PUCCH candidate set and other PUCCHs).
   In this step, both PUCCH 3 and PUCCH 4 are PUCCH 4 without repetitions, so step 3 does not need to be performed.
3) The UE executes step 4 (i.e., updates the first PUCCH candidate set to obtain a third PUCCH candidate set; determines to execute step 1 or terminate according to the third PUCCH candidate set), updates the first PUCCH candidate set to {PUCCH 1, PUCCH 2, PUCCH 3}, and determines to execute step 1 according to the updated candidate set.
   In step 4, PUCCH 4 is deleted from the initial first PUCCH candidate set and updated to {PUCCH 1, PUCCH 2, PUCCH 3}. The updated PUCCH candidate set is not empty, including more than one PUCCH, and there are still PUCCHs overlapped with the PUCCH with repetitions, so it is determined to perform step 1 again.
4) The UE executes step 1 and step 2, and determines that the third PUCCH is PUCCH 2 or PUCCH 3, and the fourth PUCCH is PUCCH 1.
   in the updated PUCCH candidate set. Regardless of whether it is in mode 1 or mode 3, according to the UCI priority, the priority of PUCCH 2 and PUCCH 3 is higher. Further, if in mode 1, the third PUCCH is determined to be the PUCCH with the earliest start symbol among PUCCH 2 and PUCCH 3, that is, PUCCH 2; if in mode 3, PUCCH 2 and PUCCH 3 are both PUCCHs without repetitions, so the starting slot/sub-slot is the same, and the UE arbitrarily selects a PUCCH as the third PUCCH, that is, the third PUCCH is PUCCH 2 or PUCCH 3, or the UE further determines the third PUCCH as PUCCH 2 according to the start symbol. The UE determines the fourth PUCCH overlapped with the third PUCCH to be PUCCH 1.
5) The UE executes step 3 to resolve the overlap between PUCCH 1 and PUCCH 2 or PUCCH 3 and discards PUCCH 1.
   If there is a PUCCH with repetitions in the second PUCCH candidate set consisting of PUCCH 1 and PUCCH 2 or PUCCH 1 and PUCCH 3, execute step 3. In step 3, if according to method 1, since the priority of SR is higher than that of CSI, PUCCH 2 is retained and PUCCH 1 is discarded; if according to method 2, the fourth PUCCH or all PUCCHs with repetitions in the fourth PUCCH are discarded, that is, PUCCH 1 is also discarded; if according to method 3, there is only one PUCCH with repetitions and there is only one PUCCH overlapped with the PUCCH with repetitions, then PUCCH 1 with lower UCI priority is discarded.
6) The UE executes step 4 and updates the PUCCH candidate set to {PUCCH 2, PUCCH 3}. The UE determines whether to execute step 1 or terminate the process based on the updated PUCCH candidate set.
   In step 3, PUCCH 1 is deleted from the PUCCH candidate set and updated to {PUCCH 2, PUCCH 3}. At this time, if the updated PUCCH candidate set is not empty, then execute step 1; or if the updated PUCCH candidate set contains more than one PUCCH, then execute step 1; or if there is no PUCCH in the updated PUCCH candidate set that overlaps with the PUCCH with repetitions, then end the process.
7) If step 1 and step 2 are continued to be performed, it is determined that the third PUCCH is PUCCH 2 or PUCCH 3, and the fourth PUCCH is empty.
   In step 1, the third PUCCH is determined to be PUCCH 2 according to mode 1. According to mode 3, the UCI priority of PUCCH 2 and PUCCH 3 is the same and the starting slot is the same, then the UE arbitrarily selects a PUCCH as the third PUCCH, that is, the third PUCCH is PUCCH 2 or PUCCH 3, or, the UE further determines, according to the start symbol, that the third PUCCH is PUCCH 2. Regardless of whether the third PUCCH is PUCCH 2 or PUCCH 3, there is no PUCCH overlapped with it in the PUCCH candidate set, so the fourth PUCCH is empty.
8) The UE skips step 3.
   Since there is no second PUCCH, there is no need to perform step 3.
9) The UE executes step 4 and updates the PUCCH candidate set to {PUCCH 3} or {PUCCH 2}, and determines whether to execute step 1 or terminate the process based on the updated PUCCH candidate set.
   In step 4, the PUCCH candidate set is updated to {PUCCH 3} or {PUCCH 2}. At this time, there is only one PUCCH in the PUCCH candidate set, and the process ends; or if the PUCCH candidate set is not empty, step 1 is executed.
10) If step 1 and step 2 are continued to be performed, it is determined that the third PUCCH is PUCCH 3 or PUCCH 2, and the fourth PUCCH is empty.
   In step 1, since there is only one PUCCH in the set, the first PUCCH is PUCCH 3 or PUCCH 2, and the second PUCCH is empty.
11) The UE skips step 3.
   Since there is no second PUCCH, there is no need to perform step 3.
12) The UE executes step 4, updates the PUCCH candidate set to be empty, and determines to end the process based on the updated PUCCH candidate set.

In step 4, the third PUCCH, ie, PUCCH 3, is deleted from the PUCCH candidate set and updated to empty, and the process ends.

Case 2: Assume that in step 1 (ie, determining the third PUCCH from the first PUCCH candidate set according to the priorities of the UCI carried by the PUCCHs and the starting time of the PUCCHs), the third PUCCH is determined according to method 2.

The method includes:
A) The UE executes step 1 and step 2 to determine that the third PUCCH is PUCCH 1 and the fourth PUCCH is {PUCCH 2, PUCCH 3}.
   The UE determines the third PUCCH. Specifically, according to the second mode, the third PUCCH is a PUCCH with the earliest start symbol in the first PUCCH candidate set, and the third PUCCH is PUCCH 1 carrying CSI. The UE determines that the fourth PUCCH overlapped with the third PUCCH is {PUCCH 2, PUCCH 3}.
B) The UE executes step 3 (de-overlapping the PUCCH with repetitions in the second PUCCH candidate set with other PUCCHs) to resolve the overlap between PUCCH 1 and PUCCH 2 and PUCCH 3. If method 2 is used, PUCCH 2 and PUCCH 3 are discarded; if method 3 is used, PUCCH 1 is discarded.

If the second method is used, the fourth PUCCH is discarded, that is, PUCCH 2 and PUCCH 3 are discarded.

If the method 3 is used, the overlap of PUCCH 1 and PUCCH 2 is processed first in PUCCH 2 and PUCCH 3 that overlap with the PUCCH with repetitions 1. Since the priority of SR is higher, PUCCH 1 carrying CSI is discarded. At this time, there is no PUCCH that overlaps with the PUCCH with repetitions, and step 3 ends.

C) The UE executes step 4 (updates the first PUCCH candidate set to obtain a third PUCCH candidate set; determines to execute step 1 or terminate the process according to the third PUCCH candidate set), and determines to execute step 1 again or terminate the process.

If PUCCH 2 and PUCCH 3 are discarded in mode 2 in B), the updated PUCCH candidate set is {PUCCH 1, PUCCH 4}. The updated PUCCH candidate set is not empty and includes more than one PUCCH, so it is determined to perform step 1 again; or, the updated PUCCH candidate set does not have a PUCCH that overlaps with the PUCCH with repetitions, and the process ends.

PUCCH 1 is discarded in mode 3 in B), the updated PUCCH candidate set is {PUCCH 2, PUCCH 3, PUCCH 4}. The updated PUCCH candidate set is not empty and includes more than one PUCCH, so it is determined to perform step 1 again; or if there is no PUCCH in the updated PUCCH candidate set that overlaps with the PUCCH with repetitions, the process ends. It should be noted that the terminal will further multiplex the overlapping non-PUCCH with repetitions 3 and PUCCH 4.

D) The UE executes step 1 and step 2, and determines that the third PUCCH and the fourth PUCCH are empty.

If PUCCH 2 and PUCCH 3 are discarded in mode 2 in B), and the updated PUCCH candidate set in C) is {PUCCH 1, PUCCH 4}, the third PUCCH is determined to be PUCCH 1 with an earlier start symbol, and the fourth PUCCH is empty.

If PUCCH 1 is discarded in mode 3 in B), and the updated PUCCH candidate set in C) is {PUCCH 2, PUCCH 3, PUCCH 4}, the third PUCCH is determined to be PUCCH 2 with the earliest start symbol, and the fourth PUCCH is empty.

E) The UE skips step 3.

Since the second PUCCH is empty in D), the UE skips step 3.

F) The UE executes step 4 and determines to execute step 1 or terminate the process.

If the third PUCCH is determined to be PUCCH 1 in D), PUCCH 1 is deleted from the PUCCH candidate set, the PUCCH candidate set is updated to {PUCCH 4}, the PUCCH candidate set is not empty, and step 1 is determined to be executed; or, there is only one PUCCH in the PUCCH candidate set, and the process ends.

If it is determined in D) that the third PUCCH is PUCCH 2, PUCCH 2 is deleted from the PUCCH candidate set, and the PUCCH candidate set is updated to {PUCCH 3, PUCCH 4}. The PUCCH candidate set is not empty and includes more than one PUCCH, and it is determined to execute step 1.

G) UE executes step 1 and step 2.

If the PUCCH candidate set updated in F) is {PUCCH 4}, the third PUCCH is determined to be PUCCH 4, and the fourth PUCCH is empty;

If the PUCCH candidate set updated in F) is {PUCCH 3, PUCCH 4}, the third PUCCH is determined to be PUCCH 3 and the fourth PUCCH is determined to be PUCCH 4.

H) The UE skips step 3.

If the fourth PUCCH in G) is empty, skip step 3;

If the third PUCCH in G) is PUCCH 3 and the fourth PUCCH is PUCCH 4, since there is no PUCCH with repetitions, step 3 is skipped. It should be noted that the terminal will further multiplex the overlapping non-PUCCH with repetitions 3 and PUCCH 4.

I) The UE executes step 4.

If the PUCCH candidate set updated in F) is {PUCCH 4}, the third PUCCH is determined to be PUCCH 4, the third PUCCH is deleted from the PUCCH candidate set, the updated PUCCH candidate set is empty, and the process ends;

If the PUCCH candidate set updated in F) is {PUCCH 3, PUCCH 4}, the third PUCCH is determined to be PUCCH 3, the third PUCCH is deleted from the PUCCH candidate set, the updated PUCCH candidate set is {PUCCH 4}, the updated PUCCH candidate set is not empty, and it is determined to execute step 1; or the updated PUCCH candidate set has only one PUCCH, and the process ends.

J) UE executes step 1.

At this time, there is only PUCCH 4 in the PUCCH candidate set, and the first PUCCH is determined to be PUCCH 4, and the second PUCCH is empty.

K) The UE skips step 3.

Since the fourth PUCCH is empty, the UE skips step three.

L) UE executes step 4.

The UE deletes the third PUCCH from the PUCCH candidate set, the updated PUCCH candidate set is empty, and the process ends.

Example 10: Using the same PUCCH situation assumptions as Example 9: Assume that in a slot/sub-slot there is PUCCH 1 carrying CSI, PUCCH 2 and PUCCH 3 carrying SR, and PUCCH 4 carrying HARQ-ACK, where PUCCH 1 is a PUCCH with repetitions, and PUCCH 2, PUCCH 3, and PUCCH 4 are PUCCHs without repetitions.

The above process is described below by taking an example where the initial first PUCCH candidate set is all PUCCHs with repetitions and PUCCHs overlapped with the PUCCHs with repetitions in a slot/sub-slot.

The initial first PUCCH candidate set includes only the PUCCH with repetitions 1 and PUCCH 2 and PUCCH 3 overlapped with PUCCH 1, that is, the initial PUCCH candidate set is {PUCCH 1, PUCCH 2, PUCCH 3}.

Assuming that the third PUCCH is determined in step one according to method one or method three, the UE behavior is the same as 4) and subsequent steps in case one of example nine, and will not be repeated here.

Assuming that the third PUCCH is determined in step 1 according to method 2, the UE behavior is the same as 1) and 2) in case 1 of example 9. In 3), the updated PUCCH candidate set does not include PUCCH 4, and the subsequent steps are not repeated. The final result is: if PUCCH 2 and PUCCH 3 are discarded in method 2 in 2), after the process is completed, PUCCH 1 and PUCCH 4 are still in the slot/sub-slot. Since the two do not overlap, the UE sends PUCCH 1 and PUCCH 4; if PUCCH 1 is discarded in method 3 in 2), after the process is completed, PUCCH 2, PUCCH 3 and PUCCH 4 are still in the slot/sub-slot. Since PUCCH 3 and PUCCH 4 overlap in time domain, the UE will also multiplex PUCCH 3 and PUCCH 4.

Example 11: Assume that in a slot/sub-slot there is PUCCH 1 carrying HARQ-ACK, PUCCH 2 carrying SR and PUCCH 3 carrying CSI, where PUCCH 3 is a PUCCH with repetitions, and PUCCH 1/2/ is a PUCCH without repetitions, as shown in Figure 14c.

The following takes an example in which an initial first PUCCH candidate set is all PUCCHs with repetitions and PUCCHs overlapped with the PUCCHs with repetitions in a slot/sub-slot to illustrate the execution process of the method in the embodiment of the present disclosure.

The initial first PUCCH candidate set includes only the PUCCH with repetitions 3 and the PUCCH 1 overlapped with the PUCCH 3, that is, the initial first PUCCH candidate set is {PUCCH 1, PUCCH 3}.
1) The UE executes step 1 (determining the third PUCCH from the first PUCCH candidate set according to the priorities of the UCI carried by the PUCCHs and the starting time of the PUCCHs), and determines that the first PUCCH is PUCCH 1; and executes step 2 (determining the fourth PUCCH from the first PUCCH candidate set), and determines that the second PUCCH is PUCCH 3;
   Since HARQ-ACK has a higher priority than CSI, the third PUCCH is PUCCH 1 and the fourth PUCCH is PUCCH 3.
2) The UE executes step 3 (de-overlapping the PUCCH with repetitions in the second PUCCH candidate set with other PUCCHs), resolves the overlap between PUCCH 1 and PUCCH 3, and discards PUCCH 3.
   No matter which method is adopted, the UE discards PUCCH 3.
3) The UE executes step 4 (updates the first PUCCH candidate set to obtain a third PUCCH candidate set; and determines to execute step 1 or end according to the third PUCCH candidate set).

The discarded PUCCH is deleted from the first PUCCH candidate set, and the first PUCCH candidate set is updated to {PUCCH 1}. The UE determines whether to execute step 1 or terminate the process according to the updated PUCCH candidate set. If the updated PUCCH candidate set is not empty, the UE executes step 1; or, if there is only one PUCCH in the updated PUCCH candidate set, the process is terminated; or, if there is no PUCCH in the updated PUCCH candidate set that overlaps with the PUCCH with repetitions, the process is terminated.

The discarded PUCCH is deleted from the first PUCCH candidate set, and the PUCCH in the first PUCCH candidate set that is not transmitted repeatedly and does not overlap with the PUCCH with repetitions is deleted, then the updated PUCCH candidate set is empty, and the process ends.

4) The UE executes step 1 and step 2, and determines that the third PUCCH is PUCCH 1 and the fourth PUCCH is empty.

5) UE skips step 3;

6) The UE executes step 4 and updates the PUCCH candidate set to empty, and the process ends.

In an embodiment of the present disclosure, when there is overlap in PUCCH, the terminal determines the processing order for the PUCCHs according to the priorities of the UCI carried by the PUCCHs and/or the starting time of the PUCCHs, and de-overlaps the PUCCH according to the processing order to ensure that the processing results of the PUCCH overlap on the terminal and the network side device are consistent, thereby avoiding missing or wrong transmission of information.

Specifically, an embodiment of the present disclosure further provides a method for processing overlap of a physical uplink control channel, which is applied to a network side device, including:

Step 201: when physical uplink control channels (PUCCHs) are overlapped, a network side device determining a processing order for the PUCCHs according to priorities of uplink control information (UCI) carried by the PUCCHs and/or starting time of the PUCCHs;

Step 202: performing a de-overlapping process for the PUCCHs according to the processing order.

In this embodiment, the PUCCH overlap means that multiple PUCCHs overlap in the time domain. When multiple PUCCHs overlap in the time domain, PUCCH discarding and/or UCI multiplexing are required to resolve the PUCCH overlap.

The processing order for the PUCCHs refers to the processing order when the de-overlapping process is performed for PUCCHs. For example, if PUCCH 1 overlaps with PUCCH 2 and PUCCH 3 in the time domain, when de-overlapping is performed, it is determined whether to prioritize the overlap between PUCCH 2 and PUCCH 1 or the overlap between PUCCH 3 and PUCCH 1. By determining the processing order of PUCCH, it can be ensured that the network side device and the terminal have the same solution for PUCCH overlap.

When determining the processing order for PUCCH, it can be determined according to the priorities of the UCI carried by the PUCCHs, for example: the PUCCH carrying UCI with a higher priority is processed first; or, it can be determined according to the starting time of the PUCCHs, for example: among each PUCCH, the PUCCH with an earlier starting time is processed first; or, it can be determined according to the priorities of the UCI carried by the PUCCHs and the starting time of the PUCCHs, for example: first determine the processing order according to the priorities of the UCI carried by the PUCCHs, and when the priorities are the same, determine the processing order according to the start symbol of the PUCCH.

Optionally, the method further includes: receiving data using the PUCCH after the de-overlapping process.

The network side device receives the PUCCH after performing de-overlapping processing on the PUCCH according to the processing order of the PUCCH. It should be noted that the network side device and the terminal use the same rules when performing de-overlapping processing on the PUCCH to ensure the same de-overlapping processing results.

In the embodiments of the present disclosure, when there is overlap in PUCCH, the network side device determines the processing order for the PUCCHs according to the priorities of the UCI carried by the PUCCHs and/or the starting time of the PUCCHs, and de-overlaps the PUCCH according to the processing order to ensure that the processing results of the PUCCH overlap on the terminal and the network side device are consistent, thereby avoiding missing or wrong transmission of information.

Optionally, the UCI includes at least one of the following:
HARQ-ACK;
SR;
CSI.

Optionally, the priority of the UCI includes:
The priority of the HARQ-ACK is higher than the priority of the SR;
The priority of the SR is higher than the priority of the CSI;
Among the CSIs, the priority of the CSI with a higher priority is higher than the priority of the CSI with a lower priority.

When determining the processing order for the PUCCHs according to the priorities of the UCI carried by the PUCCHs, the UCI carried by the PUCCHs may be HARQ-ACK, SR, CSI, etc. Among them, since the priority of HARQ-ACK is higher than the priority of SR, and the priority of SR is higher than the priority of CSI, when determining the processing order of the PUCCH, the overlap of the PUCCH carrying HARQ-ACK may be preferentially processed.

Optionally, determining a processing order for the PUCCHs according to a priorities of the UCI carried by the PUCCHs includes:
According to a descending order of priorities of the UCI carried by the PUCCHs, the processing order for the PUCCHs is determined. That is, the overlapping problem of the PUCCH carrying a higher priority UCI is preferentially processed. For example: PUCCH 1 overlaps with PUCCH 2 and PUCCH 3 in the time domain, and the priority of the UCI carried by PUCCH 2 is higher than the priority of the UCI carried by PUCCH 3, then the overlap of PUCCH 2 and PUCCH 1 is preferentially processed.

Optionally, determining the processing order for the PUCCHs according to the starting time of the PUCCHs includes: determining the processing order for the PUCCHs according to an order from the PUCCH with an early starting time to the PUCCH with a late starting time. That is, the overlapping problem of the PUCCH with an earlier starting time is preferentially processed. For example: PUCCH 1 overlaps with PUCCH 2 and PUCCH 3 in the time domain, and the starting time of PUCCH 3 is earlier than the starting time of PUCCH 2, then the overlap of PUCCH 3 with PUCCH 1 is preferentially processed.

Optionally, determining a processing order for the PUCCHs according to a priorities of the UCI carried by the PUCCHs and a starting time of the PUCCHs includes:
1) Determine a first processing order according to a descending order of priorities of the UCI carried by the PUCCHs; if there are at least two UCIs carried by the PUCCHs with the same priority, determine a second processing order according to the order from the PUCCH with an early starting time to the PUCCH with a late starting time which have the same priority;
   or,
2) Determine the third processing order according to an order from the PUCCH with an early starting time to the PUCCH with a late starting time; if there are at least two PUCCHs with the same starting time, determine the fourth processing order according to a descending order of priorities of the UCI of the PUCCHs with the same starting time.

In the above scheme 1), the processing order of PUCCH is first determined according to the priority of the UCI carried by PUCCH. If there are multiple UCIs carried by PUCCH with the same priority, the processing order is determined according to the starting time of each PUCCH with the same priority. For example: PUCCH 1 overlaps with PUCCH 2, PUCCH 3, and PUCCH 4 in the time domain, the priority of UCI carried by PUCCH 2 is higher than the priority of UCI carried by PUCCH 3 and PUCCH 4, and the priority of UCI carried by PUCCH 3 and PUCCH 4 is the same, then the overlap of PUCCH 2 and PUCCH 1 is processed first, and then the processing order is determined according to the starting time of PUCCH 3 and PUCCH 4. Assuming that the starting time of PUCCH 4 is earlier than the start symbol time of PUCCH 3, the overlap of PUCCH 4 and PUCCH 1 is processed.

In the above scheme 2), the processing order of PUCCH is first determined according to the starting time of PUCCH. If there are multiple PUCCHs with the same starting time, the processing order is determined according to the priority of UCI carried by each PUCCH with the same starting time. For example: PUCCH 1 overlaps with PUCCH 2, PUCCH 3, and PUCCH 4 in the time domain, and the starting time of PUCCH 2 is earlier than that of PUCCH 3 and PUCCH 4, and the starting time of PUCCH 3 and PUCCH 4 is the same, then the overlap of PUCCH 2 and PUCCH 1 is processed first, and then the processing order is determined according to the priority of UCI carried by PUCCH 3 and PUCCH 4. Assuming that the priority of UCI carried by PUCCH 3 is higher than the priority of UCI carried by PUCCH 4, the overlap of PUCCH 3 and PUCCH 1 is processed.

As an optional embodiment, when there is overlap of PUCCH, the network side device determines the processing order for the PUCCHs according to the priorities of the UCI carried by the PUCCHs and/or the starting time of the PUCCHs, including at least one of the following:
Mode 1: When the first PUCCH with repetitions overlaps with M second PUCCHs, the processing order of the M second PUCCHs is determined according to the priorities of the UCIs carried by the M second PUCCHs and/or the starting time of the M second PUCCHs;
Mode 2: When there are N first PUCCHs with repetitions, the processing order of the first PUCCHs is determined according to the priority of the UCI carried by the first PUCCH and/or the starting time of the first PUCCH;
M and N are both greater than or equal to 2.

For the above-mentioned method 1, the first PUCCH is a PUCCH with repetitions, and the first PUCCH overlaps with multiple second PUCCHs, where the multiple second PUCCHs may include PUCCHs with repetitions and/or non-PUCCHs with repetitions. The processing order of the M second PUCCHs is determined according to the priority of the UCI carried by the M second PUCCHs and/or the starting time of the second PUCCH. Optionally, in this embodiment, the processing order of the first PUCCH is not limited, that is, if there are multiple PUCCHs with repetitions, the processing order of the overlapping first PUCCHs can be determined in any order.

For the above-mentioned method 2, the first PUCCH is a PUCCH with repetitions, including multiple first PUCCHs. In this case, the processing order of each first PUCCH overlapped with other PUCCHs is determined separately. Optionally, in this embodiment, the processing order of other PUCCHs overlapped with the first PUCCH is not limited, that is, if multiple PUCCHs overlap with one first PUCCH, the overlap with the first PUCCH can be processed in any order.

Optionally, some of the N first PUCCHs have overlapped PUCCHs; or, each of the N first PUCCHs has an overlapped PUCCH.

In this embodiment, when there are N first PUCCHs with repetitions, the overlapping of the PUCCHs may include: some of the N first PUCCHs have overlapped PUCCHs, and it is necessary to perform de-overlapping processing on the first PUCCHs with overlapped PUCCHs; it may also include: each first PUCCH has overlapped PUCCHs, and it is necessary to perform de-overlapping processing on each first PUCCH.

It should be noted that, in this embodiment, when some of the N first PUCCHs have overlapped PUCCHs, determining the processing order for the first PUCCHs may include: determining the processing order for the first PUCCHs, and the first PUCCHs among the N first PUCCHs that do not have overlapped PUCCHs do not need to be de-overlapped.

Optionally, when each of the N first PUCCHs has an overlapped PUCCH, there is at least one identical overlapped PUCCH between each of the N first PUCCHs.

That is, when there are multiple first PUCCHs, there is at least one identical PUCCH among the multiple PUCCHs overlapping each first PUCCH, for example: the first PUCCH includes PUCCH 1 and PUCCH 2, the multiple PUCCHs overlapped with PUCCH 1 are recorded as the first part PUCCH, and the multiple PUCCHs overlapped with PUCCH 2 are recorded as the second part PUCCH, and there is at least one identical PUCCH among the first part PUCCH and the second part PUCCH.

Optionally, the above-mentioned method 1 and method 2 may be used together to determine the processing order of the PUCCH. For example: if there are multiple first PUCCHs overlapped with other PUCCHs, and each first PUCCH has multiple overlapping second PUCCHs, then the processing order of each first PUCCH may be determined first using method 2, and when processing the overlapping problem of each first PUCCH, the processing order of each second PUCCH may be determined based on method 1.

Optionally, the starting time includes at least one of the following:
starting slot;
start sub-slot;
start symbol.

In this embodiment, when determining the processing order for the PUCCHs according to the starting time of the PUCCHs, it can be determined based on one or more of the starting slot, starting sub-slot and start symbol of the PUCCH. Among them, the processing order for the PUCCHs can be first determined based on the starting slot/sub-slot of each PUCCH; if multiple PUCCHs are in the same starting slot/sub-slot, the processing order for the PUCCHs can be determined based on the start symbol in the starting slot/sub-slot.

Optionally, after de-overlapping is performed on the PUCCH, there is no first PUCCH overlapped with other PUCCHs in the remaining PUCCHs.

In this embodiment, when multiple PUCCHs overlap, after the PUCCH is de-overlapped according to the priorities of the UCI carried by the PUCCHs and/or the starting time of the PUCCHs, among the remaining PUCCHs, there is no overlap between the PUCCH with repetitions and other PUCCHs, but there may be overlap between multiple non-PUCCHs with repetitions. In this case, UCI multiplexing can be performed on multiple non-PUCCHs with repetitions.

As an optional embodiment, the method further includes:
repeating the following steps until no PUCCH with repetitions overlaps with other PUCCHs in the slot or sub-slot where the PUCCH is located:
In the case of overlap of PUCCH, the network side device determines the processing order for the PUCCHs according to the priorities of the UCI carried by the PUCCHs and/or the starting time of the PUCCHs; and performs de-overlapping processing on the PUCCH according to the processing order.

In this embodiment, the network side device repeatedly executes the execution process of the method for processing the overlap of the physical uplink control channel in the embodiment of the present disclosure until there is no overlap between the PUCCH with repetitions and other PUCCHs in the slot or sub-slot where the PUCCH is located. That is, in the embodiment of the present disclosure, the final result obtained after the PUCCH is processed is: there is no overlap between the PUCCH with repetitions and other PUCCHs in the remaining PUCCHs in the slot or sub-slot.

As an optional embodiment, when the PUCCHs are overlapped, the network side device determines the processing order for the PUCCHs according to the priorities of the UCI carried by the PUCCHs and/or the starting time of the PUCCHs, including:
Determine a third PUCCH according to the priorities of the UCI carried by the PUCCHs and/or the starting time of the PUCCHs;
when there is an overlapping fourth PUCCH with the third PUCCH, and there is a PUCCH with repetitions between the third PUCCH and the fourth PUCCH, it is determined to perform de-overlapping processing between the PUCCH with repetitions and other PUCCHs; where the third PUCCH is a PUCCH with repetitions or a non-PUCCH with repetitions.

In this embodiment, when determining the processing order for PUCCH, a third PUCCH can be first determined based on the priorities of the UCI carried by the PUCCHs and/or the starting time of the PUCCHs. The third PUCCH can be a PUCCH with repetitions or a PUCCH without repetitions. The de-overlapping processing order is determined based on the overlapping situation of the third PUCCH. Among them, if there is an overlapped PUCCH in the third PUCCH, that is, the fourth PUCCH, and there is a PUCCH with repetitions in the third PUCCH and the fourth PUCCH, the overlapping problem between the PUCCH with repetitions and other PUCCHs is processed. Among them, the fourth PUCCH can include multiple PUCCHs.

As an optional embodiment, determining the third PUCCH according to the priorities of the UCI carried by the PUCCHs and/or the starting time of the PUCCHs includes:
Step 1: determining the third PUCCH from the first PUCCH candidate set according to the priorities of the UCI carried by the PUCCHs and the starting time of the PUCCHs;
The method further includes:
   Step 2: Determine the fourth PUCCH from the first PUCCH candidate set; the third PUCCH and the fourth PUCCH constitute a second PUCCH candidate set;
   performing the de-overlapping processing between the PUCCH with repetitions and other PUCCHs, including:
      Step 3: De-overlapping the PUCCH with repetitions and other PUCCHs in the second PUCCH candidate set;
      The method further includes:
         Step 4: Update the first PUCCH candidate set to obtain a third PUCCH candidate set; determine to execute step 1 or end according to the third PUCCH candidate set.

In this embodiment, when performing de-overlapping processing, the third PUCCH is determined from the first PUCCH candidate set, and the fourth PUCCH is determined from the first PUCCH candidate set; the fourth PUCCH is a PUCCH in the first PUCCH candidate set that overlaps with the third PUCCH. The third PUCCH and the fourth PUCCH constitute a second PUCCH candidate set.

De-overlapping is performed on the PUCCH with repetitions and other PUCCHs in the second PUCCH candidate set, and the first PUCCH candidate set is updated after the de-overlapping process to obtain a third PUCCH candidate set. Since after each de-overlapping process, there may still be overlaps between the PUCCH with repetitions and other PUCCHs, it is necessary to determine whether to execute step 1 or end according to the third PUCCH candidate set.

Optionally, if there is no overlap between the PUCCH with repetitions and other PUCCHs in the third PUCCH candidate set obtained after de-overlapping, the processing ends; if there is still overlap between the PUCCH with repetitions and other PUCCHs, step 1 is repeated.

As an optional embodiment, the first PUCCH candidate set initially includes: all PUCCHs in a slot or a sub-slot; or, all PUCCHs with repetitions in a slot or a sub-slot and PUCCHs overlapped with the PUCCHs with repetitions.

As an optional embodiment, determining the third PUCCH from the first PUCCH candidate set according to the priorities of the UCI carried by the PUCCHs and the starting time of the PUCCHs includes one of the following methods:
Method 1: Determine the third PUCCH as the PUCCH with the highest UCI priority in the first PUCCH candidate set; if there are multiple PUCCHs with the highest UCI priority in the first PUCCH candidate set, determine the third PUCCH as: the PUCCH with the earliest start symbol among the multiple PUCCHs with the highest UCI priority.

In the first mode, the third PUCCH is a PUCCH with the highest UCI priority in the first PUCCH candidate set. If there are multiple PUCCHs with the same UCI priority, the third PUCCH is a PUCCH with the earliest start symbol.

Optionally, if there are multiple PUCCHs with the same UCI priority and the same start symbol, the third PUCCH can be any one of them; or the third PUCCH is a PUCCH with the largest number of symbols; or, if there are multiple PUCCHs with the same UCI priority, the same start symbol and the same number of PUCCH symbols, the third PUCCH is any one of them.

Method 2: Determine the third PUCCH as the PUCCH with the earliest start symbol in the first PUCCH candidate set; if the first PUCCH candidate set has multiple PUCCHs with the earliest start symbols, determine the third PUCCH as: the PUCCH with the highest UCI priority among the multiple PUCCHs with the earliest start symbols.

In the second mode, the third PUCCH is a PUCCH with the earliest start symbol in the first PUCCH candidate set. If there are multiple PUCCHs with the same start symbol, the third PUCCH is a PUCCH with the highest UCI priority.

Optionally, if there are multiple PUCCHs with the same UCI priority and the same start symbol, the third PUCCH is any one of them; or the first PUCCH is the PUCCH with the largest number of symbols; or, if there are multiple PUCCHs with the same UCI priority, the same start symbol and the same number of PUCCH symbols, the third PUCCH is any one of them.

Method 3: Determine that the third PUCCH is the PUCCH with the highest UCI priority in the first PUCCH candidate set; if there are multiple PUCCHs with the highest UCI priority in the first PUCCH candidate set, determine that the third PUCCH is the PUCCH with the earliest starting slot or sub-slot among the multiple PUCCHs with the highest UCI priority.

In the third mode, the third PUCCH is a PUCCH with the highest UCI priority in the first PUCCH candidate set. If there are multiple PUCCHs with the same UCI priority, the third PUCCH is a PUCCH with the earliest starting slot/sub-slot.

Optionally, determining the third PUCCH from the first PUCCH candidate set according to the priorities of the UCI carried by the PUCCHs and the starting time of the PUCCHs, further including:

when the third PUCCH is determined according to the third mode, if there are multiple PUCCHs with the highest UCI priority and the earliest starting slot or sub-slot in the first PUCCH candidate set, it is determined that the third PUCCH is one of the following:

Any one of the multiple PUCCHs with the highest UCI priority and the earliest starting slot or sub-slot;

The PUCCH with the earliest start symbol among the multiple PUCCHs with the highest UCI priority and the earliest starting slot or sub-slot.

In this embodiment, for the third method of determining the third PUCCH, if there are multiple PUCCHs with the earliest UCI priority and the earliest starting slot/sub-slot in the first PUCCH candidate set, it can be determined that the third PUCCH is any one of them; or, the third PUCCH is determined to be a PUCCH with the earliest start symbol among multiple PUCCHs with the highest UCI priority and the earliest starting slot/sub-slot.

Optionally, if there are multiple PUCCHs with the same UCI priority, the same starting slot/sub-slot and the same start symbol, the third PUCCH is any one of them; or the third PUCCH is the PUCCH with the largest number of symbols. If there are multiple PUCCHs with the same UCI priority, the same start symbol and the same number of PUCCH symbols, the third PUCCH is any one of them.

As an optional embodiment, determining the third PUCCH from the first PUCCH candidate set further includes:

If the number of the third PUCCHs determined according to the method 1, the method 2 or the method 3 is X, and X is greater than 1, selecting one of the target PUCCHs as the third PUCCH;

The target PUCCH is one of the following:
Any one of the X PUCCHs;
The PUCCH with the longest duration among the X PUCCHs;
Any one of the PUCCHs with the longest duration among the X PUCCHs.

In this embodiment, when the third PUCCH is determined from the first PUCCH candidate set using method 1, method 2 or method 3, if the number of third PUCCHs obtained is greater than 1, that is, there are multiple third PUCCHs, it is necessary to determine one of the PUCCHs as the final third PUCCH. Specifically, it can be determined that the final third PUCCH is any one of them; or, it can be determined that the final third PUCCH is the PUCCH with the longest duration (for example, the largest number of symbols); or, if there are multiple PUCCHs with the longest duration, it can be determined that the final third PUCCH is any one of them.

When performing de-overlapping processing, if the fourth PUCCH does not exist, that is, there is no PUCCH overlapped with the third PUCCH in the first PUCCH candidate set, or there is no PUCCH with repetitions in the third PUCCH and the fourth PUCCH, the step of "updating the first PUCCH candidate set" is directly performed.

As an optional embodiment, the de-overlapping processing of the PUCCH with repetitions and other PUCCHs in the second PUCCH candidate set includes one of the following methods:
Method 1: Discard all PUCCHs except the fifth PUCCH in the second PUCCH candidate set; where the fifth PUCCH is the PUCCH with the highest UCI priority in the second PUCCH candidate set; if there are multiple PUCCHs with the highest UCI priority in the second PUCCH candidate set, then the fifth PUCCH is the PUCCH with the earliest starting slot or sub-slot among the multiple PUCCHs with the highest UCI priority.

In the first approach, a fifth PUCCH is determined in a second PUCCH candidate set consisting of a third PUCCH and a fourth PUCCH, and all other PUCCHs except the fifth PUCCH in the second PUCCH candidate set are discarded.

The fifth PUCCH is a PUCCH with the highest UCI priority in the second PUCCH candidate set; if there are multiple PUCCHs with the same UCI priority, the fifth PUCCH is a PUCCH with the earliest starting slot/sub-slot.

Method 2: discard all fourth PUCCHs in the second PUCCH candidate set; or, if the third PUCCH is a PUCCH with repetitions, discard all fourth PUCCHs in the second PUCCH candidate set; otherwise, discard all PUCCHs with repetitions in the second PUCCH candidate set.

In the second method, the fourth PUCCH is discarded. Optionally, all fourth PUCCHs in the second PUCCH candidate set may be discarded; or, if the third PUCCH is a PUCCH with repetitions, all fourth PUCCHs in the second PUCCH candidate set are discarded, otherwise, all PUCCHs with repetitions in the second PUCCH candidate set are discarded.

Method 3: For multiple PUCCHs with repetitions in the second PUCCH set, de-overlapping processing is performed in sequence according to the priority and/or starting time of the UCI carried by the PUCCH with repetitions; for multiple PUCCHs overlapped with a PUCCH with repetitions, de-overlapping processing is performed in sequence according to the priority of the UCI carried by the multiple PUCCHs and/or the starting time of the PUCCHs.

In method 3, for the PUCCHs with repetitions in the second PUCCH set, the overlap between the PUCCH with repetitions and other PUCCHs is processed in sequence according to the priority of the UCI and/or the starting time of the PUCCHs, until all the PUCCHs with repetitions have no overlapped PUCCHs. For multiple PUCCHs overlapped with a specific PUCCH with repetitions, the overlap with the specific PUCCH with repetitions is processed in sequence according to the priority of the UCI and/or the starting time of the PUCCHs.

Among them, the PUCCH with a lower priority is discarded in the two PUCCHs. If the priorities are the same, the PUCCH with a later starting slot/sub-slot is discarded.

Optionally, the above starting time is a start symbol or a starting slot/sub-slot of PUCCH.

As an optional embodiment, the updating the first PUCCH candidate set includes at least one of the following:
1) If the fourth PUCCH does not exist in the first PUCCH candidate set, deleting the third PUCCH from the first PUCCH candidate set.
   In this embodiment, if the fourth PUCCH does not exist in the first PUCCH candidate set, that is, there is no PUCCH in the first PUCCH candidate set that overlaps with the third PUCCH, the third PUCCH is deleted from the first PUCCH candidate set.
2) If there is no PUCCH with repetitions in the second PUCCH candidate set, the third PUCCH is deleted from the first PUCCH candidate set.
   In this embodiment, if there is no PUCCH with repetitions in the third PUCCH and the fourth PUCCH, the third PUCCH is deleted from the PUCCH candidate set.
3) deleting the discarded PUCCH from the first PUCCH candidate set;
4) deleting the PUCCHs that are not transmitted repeatedly and do not overlap with the PUCCHs that are transmitted repeatedly in the first PUCCH candidate set;
5) If the step of de-overlapping the PUCCH with repetitions and other PUCCHs in the second PUCCH candidate set is performed according to the second approach, the third PUCCH is deleted from the first PUCCH candidate set.

As an optional embodiment, determining to execute step 1 or to end according to the third PUCCH candidate set includes one of the following:

If the third PUCCH candidate set is not empty, then execute step 1; otherwise, end;

If there is only one PUCCH in the third PUCCH candidate set, then end; otherwise, execute the step 1;

If there is no PUCCH in the third PUCCH candidate set that overlaps with the PUCCH with repetitions, the process ends; otherwise, the process proceeds to step 1.

It should be noted that the network side device in the embodiment of the present disclosure determines the processing order for the PUCCH; according to the processing order, the implementation process of de-overlapping the PUCCH is the same as the above-mentioned method embodiment applied to the terminal, and will not be repeated here.

In the embodiments of the present disclosure, when there is overlap in PUCCH, the processing order for the PUCCHs is determined according to the priorities of the UCI carried by the PUCCHs and/or the starting time of the PUCCHs, and the PUCCH is de-overlapped according to the processing order to ensure that the processing results of the PUCCH overlap on the terminal and the network side device are consistent, thereby avoiding missing or wrong transmission of information.

The above embodiment introduces the method for processing overlapping physical uplink control channels of the present disclosure. The following embodiment will further illustrate the corresponding device in conjunction with the accompanying drawings.

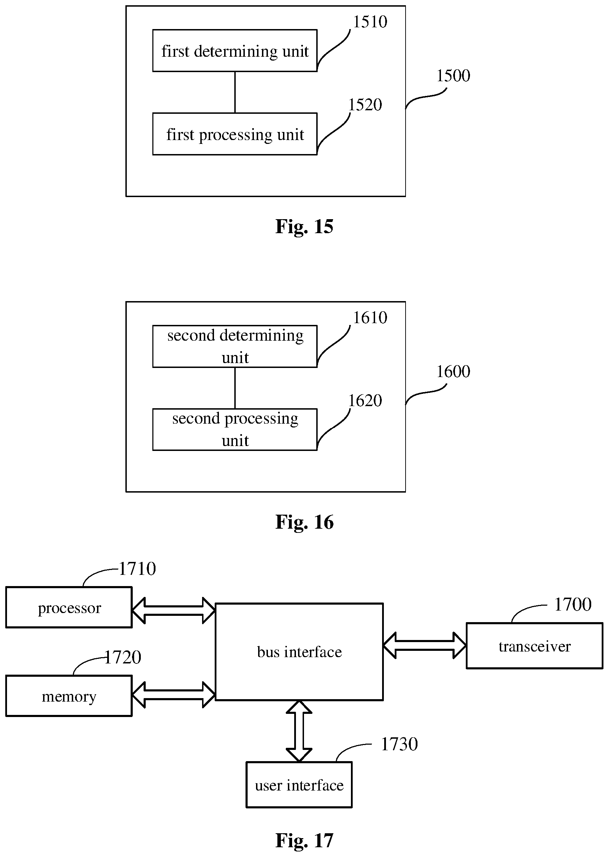

Specifically, as shown in FIG. 15, an embodiment of the present disclosure provides a appratus 1500 for processing overlapping physical uplink control channels, which is applied to a terminal and includes:
a first determining unit 1510, configured to, when physical uplink control channels (PUCCHs) are overlapped, determine a processing order for the PUCCHs according to priorities of uplink control information (UCI) carried by the PUCCHs and/or starting time of the PUCCHs
a first processing unit 1520, configured to perform a de-overlapping process for the PUCCHs according to the processing order.

Optionally, the first determining unit includes at least one of the following:
a first determining sub-unit, configured to, when first PUCCH with repetitions overlaps with the M second PUCCHs, determine a processing order for the M second PUCCHs according to priorities of UCI carried by the M second PUCCHs and/or starting time of the M second PUCCHs;
a second determining sub-unit, configured to, when there are N first PUCCHs with repetitions, determine a processing order for the first PUCCHs according to priorities of UCI carried by the first PUCCHs and/or starting time of the first PUCCHs;
M and N are both greater than or equal to 2.

Optionally, some of the PUCCHs in the N first PUCCHs have overlapped PUCCHs;
or,
each of the N first PUCCHs has an overlapped PUCCH.

Optionally, when each of the N first PUCCHs has an overlapped PUCCH, there is at least one identical overlapped PUCCH between each of the N first PUCCHs.

Optionally, the apparatus further includes: a third processing unit: configured to repeatedly perform the following steps until no PUCCH with repetitions overlaps with other PUCCHs in the slot or sub-slot where the PUCCH is located:
In the case of overlap of PUCCHs, the terminal determines a processing order for the PUCCHs according to the priorities of the UCI carried by the PUCCHs and/or the starting time of the PUCCHs; and performs de-overlapping processing on the PUCCHs according to the processing order.

Optionally, the first determining unit includes:
a fifth determining subunit, configured to determine a third PUCCH according to the priorities of the UCI carried by the PUCCHs and/or the starting time of the PUCCHs;
a sixth determining subunit, configured to determine to perform de-overlapping processing between the PUCCH with repetitions and other PUCCHs when there is a fourth PUCCH overlapping the third PUCCH and there is a PUCCH with repetitions between the third PUCCH and the fourth PUCCH;
The third PUCCH is a PUCCH with repetitions or not a PUCCH with repetitions.

Optionally, the fifth determining subunit is further configured to perform:
Step 1: determining the third PUCCH from a first PUCCH candidate set according to the priorities of the UCI carried by the PUCCHs and the starting time of the PUCCHs;
the apparatus further includes a third determining unit configured to perform:
   Step 2: determining the fourth PUCCH from the first PUCCH candidate set; where the third PUCCH and the fourth PUCCH constitute a second PUCCH candidate set;
   the apparatus further includes a third processing unit configured to perform:
      Step 3: performing the de-overlapping process for the PUCCH with repetitions and other PUCCHs in the second PUCCH candidate set;
      the apparatus further includes a fourth processing unit configured to perform:
         Step 4: updating the first PUCCH candidate set to obtain a third PUCCH candidate set; determining to execute the Step 1 or to end the process according to the third PUCCH candidate set.

Optionally, the first PUCCH candidate set initially includes:
All PUCCHs in a slot or a sub-slot; or, all PUCCHs with repetitions in a slot or a sub-slot and PUCCHs overlapped with the PUCCHs with repetitions.

Optionally, the fifth determining subunit is further configured to execute one of the following methods:
Method 1: determine that the third PUCCH is the PUCCH with the highest UCI priority in the first PUCCH candidate set; if there are multiple PUCCHs with the highest UCI priority in the first PUCCH candidate set, determine that the third PUCCH is: the PUCCH with the earliest start symbol among the multiple PUCCHs with the highest UCI priority;
Method 2: determine that the third PUCCH is the PUCCH with the earliest start symbol in the first PUCCH candidate set; if the first PUCCH candidate set has multiple PUCCHs with the earliest start symbols, determine that the third PUCCH is: the PUCCH with the highest UCI priority among the multiple PUCCHs with the earliest start symbols;
Method 3: Determine that the third PUCCH is the PUCCH with the highest UCI priority in the first PUCCH candidate set; if there are multiple PUCCHs with the highest UCI priority in the first PUCCH candidate set, determine that the third PUCCH is the PUCCH with the earliest starting slot or sub-slot among the multiple PUCCHs with the highest UCI priority.

Optionally, the fifth determining subunit is further configured to perform:
when the third PUCCH is determined according to the third mode, if there are multiple PUCCHs with the highest UCI priority and the earliest starting slot or sub-slot in the first PUCCH candidate set, it is determined that the third PUCCH is one of the following:
any one of the multiple PUCCHs with the highest UCI priority and the earliest starting slot or sub-slot;
the PUCCH with the earliest start symbol among the multiple PUCCHs with the highest UCI priority and the earliest starting slot or sub-slot.
Optionally, the fifth determining subunit is further configured to perform
if the number of the third PUCCHs determined according to the method 1, the method 2 or the method 3 is X, and X is greater than 1, selecting one of the target PUCCHs as the third PUCCH;

The target PUCCH is one of the following:
Any one of the X PUCCHs;
The PUCCH with the longest duration among the X PUCCHs;
Any one of the PUCCHs with the longest duration among the X PUCCHs.

Optionally, the third processing unit is further configured to execute one of the following methods:
Method 1: discarding other PUCCHs except the fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discard all fourth PUCCHs in the second PUCCH candidate set; otherwise, discard all PUCCHs with repetitions in the second PUCCH candidate set;
Method 3: For multiple PUCCHs with repetitions in the second PUCCH set, de-overlapping processing is performed in sequence according to the priority and/or starting time of the UCI carried by the PUCCH with repetitions; for multiple PUCCHs overlapped with a PUCCH with repetitions, de-overlapping processing is performed in sequence according to the priority of the UCI carried by the multiple PUCCHs and/or the starting time of the PUCCHs.

Optionally, the fourth processing unit is further configured to perform at least one of the following:
If the fourth PUCCH does not exist in the first PUCCH candidate set, deleting the third PUCCH from the first PUCCH candidate set;
If there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the step of de-overlapping the PUCCH with repetitions and other PUCCHs in the second PUCCH candidate set is performed according to the second approach, the third PUCCH is deleted from the first PUCCH candidate set.

Optionally, the fourth processing unit is further configured to perform one of the following:
If the third PUCCH candidate set is not empty, then execute step 1; otherwise, end the process;
If there is only one PUCCH in the third PUCCH candidate set, then end the process; otherwise, execute the step 1;
If there is no PUCCH in the third PUCCH candidate set that overlaps with the PUCCH with repetitions, the process ends; otherwise, the process proceeds to step 1.

Optionally, the first determining unit is further configured to:
determine the processing order for the PUCCHs according to a descending order of priorities of the UCI carried by the PUCCHs.

Optionally, the first determining unit is further configured to:
determine the processing order for the PUCCHs according to an order from the PUCCH with an early starting time to the PUCCH with a late starting time.

Optionally, the first determining unit is further configured to:
determine a first processing order according to a descending order of priorities of the UCI carried by the PUCCHs; if there are at least two UCIs carried by the PUCCHs with the same priority, determine a second processing order according to the order from the PUCCH with an early starting time to the PUCCH with a late starting time which have the same priority;
   or,
determine the third processing order according to an order from the PUCCH with an early starting time to the PUCCH with a late starting time; if there are at least two PUCCHs with the same starting time, the fourth processing order is determined according to a descending order of priorities of the UCI of the PUCCHs with the same starting time.

Optionally, the starting time includes at least one of the following:
starting slot;
start sub-slot;
start symbol.

Optionally, after de-overlapping is performed on the PUCCH, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priority of the UCI includes:
The priority of the HARQ-ACK is higher than the priority of the SR;
The priority of the SR is higher than the priority of the CSI;
Among the CSIs, the priority of the CSI with a higher priority is higher than the priority of the CSI with a lower priority.

Optionally, the device further includes:
a first sending unit, configured to send data using the PUCCH after the de-overlapping process.

It should be noted here that the above-mentioned device provided in the embodiment of the present disclosure can implement all the method steps implemented in the above-mentioned method embodiment applied to the terminal, and can achieve the same technical effect. The parts and beneficial effects of this embodiment that are the same as the method embodiment will not be described in detail here.

Specifically, as shown in FIG. 16, an embodiment of the present disclosure provides a apparatus 1600 for processing overlapping physical uplink control channels, which is applied to a network side device and includes:
a second determining unit 1610, configured to, when physical uplink control channels (PUCCHs) are overlapped, determine a processing order for the PUCCHs according to priorities of uplink control information (UCI) carried by the PUCCHs and/or starting time of the PUCCHs;
a second processing unit 1620, configured to perform a de-overlapping process for the PUCCHs according to the processing order.

Optionally, the second determining unit includes at least one of the following:
a third determining subunit, configured to determine, when the first PUCCH with repetitions overlaps with the M second PUCCHs, a processing order for the M second PUCCHs according to priorities of UCIs carried by the M second PUCCHs and/or starting time of the M second PUCCHs;
a fourth determining subunit, configured to determine, in the case where there are N first PUCCHs with repetitions, a processing order for the first PUCCH according to the priority of the UCI carried by the first PUCCH and/or the starting time of the first PUCCH;
M and N are both greater than or equal to 2.

Optionally, some of the PUCCHs in the N first PUCCHs have overlapped PUCCHs;
or,
each of the N first PUCCHs has an overlapped PUCCH.

Optionally, when each of the N first PUCCHs has an overlapped PUCCH, there is at least one identical overlapped PUCCH between each of the N first PUCCHs.

Optionally, the device further includes: a fifth processing unit, the fifth processing unit being further configured to: repeatedly perform the following steps until no PUCCH with repetitions overlaps with other PUCCHs in the slot or sub-slot where the PUCCH is located:
when PUCCHs overlap, the network side device determines the processing order of the PUCCHs according to the priorities of the UCI carried by the PUCCHs and/or the starting time of the PUCCHs;
according to the processing order, a de-overlapping process is performed on the PUCCH.

Optionally, the second determining unit includes:
an eighth determining subunit, configured to determine a third PUCCH according to the priorities of the UCI carried by the PUCCHs and/or the starting time of the PUCCHs;
a ninth determining subunit, configured to determine to perform de-overlapping processing between the PUCCH with repetitions and other PUCCHs when there is a fourth PUCCH overlapping the third PUCCH and there is a PUCCH with repetitions between the third PUCCH and the fourth PUCCH;

The third PUCCH is a PUCCH with repetitions or not a PUCCH with repetitions.

Optionally, the eighth determining subunit is further configured to execute:
Step 1: determining the third PUCCH from the first PUCCH candidate set according to the priorities of the UCI carried by the PUCCHs and the starting time of the PUCCHs;
The apparatus further includes: a fourth determining unit, the fourth determining unit being configured to execute:
   Step 2: determining the fourth PUCCH from the first PUCCH candidate set; the third PUCCH and the fourth PUCCH constitute a second PUCCH candidate set;
   The apparatus further includes: a sixth processing unit, where the sixth processing unit is configured to execute:
      Step 3: performing a de-overlapping process for PUCCH with repetitions and other PUCCHs in the second PUCCH candidate set;
      The apparatus further includes: a seventh processing unit, where the seventh processing unit is configured to execute:
         Step 4: updating the first PUCCH candidate set to obtain a third PUCCH candidate set; determine to execute step 1 or end according to the third PUCCH candidate set.

Optionally, the first PUCCH candidate set initially includes:
all PUCCHs in a slot or a sub-slot; or, all PUCCHs with repetitions in a slot or a sub-slot and PUCCHs overlapped with the PUCCHs with repetitions.

Optionally, the eighth determining subunit is further configured to execute one of the following methods:
Method 1: determining that the third PUCCH is the PUCCH with the highest UCI priority in the first PUCCH candidate set; if there are multiple PUCCHs with the highest UCI priority in the first PUCCH candidate set, determine that the third PUCCH is: the PUCCH with the earliest start symbol among the multiple PUCCHs with the highest UCI priority;
Method 2: determining that the third PUCCH is the PUCCH with the earliest start symbol in the first PUCCH candidate set; if the first PUCCH candidate set has multiple PUCCHs with the earliest start symbols, determine that the third PUCCH is: the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determine that the third PUCCH is the PUCCH with the earliest starting slot or sub-slot among the multiple PUCCHs with the highest UCI priority.

Optionally, the eighth determining subunit is further configured to:
when the third PUCCH is determined according to the third mode, if there are multiple PUCCHs with the highest UCI priority and the earliest starting slot or sub-slot in the first PUCCH candidate set, it is determined that the third PUCCH is one of the following:
Any one of the multiple PUCCHs with the highest UCI priority and the earliest starting slot or sub-slot;
The PUCCH with the earliest start symbol among the multiple PUCCHs with the highest UCI priority and the earliest starting slot or sub-slot.

Optionally, the eighth determining subunit is further configured to: if the number of the third PUCCHs determined according to the manner one, the manner two or the manner three is X, and X is greater than 1, select one of the target PUCCHs as the third PUCCH;
The target PUCCH is one of the following:
Any one of the X PUCCHs;
The PUCCH with the longest duration among the X PUCCHs;
Any one of the PUCCHs with the longest duration among the X PUCCHs.

Optionally, the sixth processing unit is configured to execute one of the following methods:
Method 1: discarding other PUCCHs except the fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discard all fourth PUCCHs in the second PUCCH candidate set; otherwise, discard all PUCCHs with repetitions in the second PUCCH candidate set;
Method 3: For multiple PUCCHs with repetitions in the second PUCCH set, de-overlapping processing is performed in sequence according to the priority and/or starting time of the UCI carried by the PUCCH with repetitions; for multiple PUCCHs overlapped with a PUCCH with repetitions, de-overlapping processing is performed in sequence according to the priority of the UCI carried by the multiple PUCCHs and/or the starting time of the PUCCHs.

Optionally, the seventh processing unit is configured to perform at least one of the following:
If the fourth PUCCH does not exist in the first PUCCH candidate set, deleting the third PUCCH from the first PUCCH candidate set;
If there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the step of de-overlapping the PUCCH with repetitions and other PUCCHs in the second PUCCH candidate set is performed according to the second approach, the third PUCCH is deleted from the first PUCCH candidate set.

Optionally, the seventh processing unit is configured to perform one of the following:
if the third PUCCH candidate set is not empty, then execute step 1; otherwise, end;
if there is only one PUCCH in the third PUCCH candidate set, then end; otherwise, execute the step 1;
if there is no PUCCH in the third PUCCH candidate set that overlaps with the PUCCH with repetitions, the process ends; otherwise, the process proceeds to step 1.

Optionally, the second determining unit is further configured to:
The processing order for the PUCCHs is determined according to a descending order of priorities of the UCI carried by the PUCCHs.

Optionally, the second determining unit is further configured to:
determine the processing order for the PUCCHs according to an order from the PUCCH with an early starting time to the PUCCH with a late starting time.

Optionally, the second determining unit is further configured to:
determine a first processing order according to a descending order of priorities of the UCI carried by the PUCCHs; if there are at least two UCIs carried by the PUCCHs with the same priority, determine a second processing order according to the order from the PUCCH with an early starting time to the PUCCH with a late starting time which have the same priority;
   or,
determine the third processing order according to an order from the PUCCH with an early starting time to the PUCCH with a late starting time; if there are at least two PUCCHs with the same starting time, the fourth processing order is determined according to a descending order of priorities of the UCI of the PUCCHs with the same starting time.

Optionally, the starting time includes at least one of the following:
starting slot;
start sub-slot;
start symbol.

Optionally, after de-overlapping is performed on the PUCCH, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priority of the UCI includes:
The priority of the HARQ-ACK is higher than the priority of the SR;
The priority of the SR is higher than the priority of the CSI;
Among the CSIs, the priority of the CSI with a higher priority is higher than the priority of the CSI with a lower priority.

Optionally, the device further includes:
a first receiving unit, configured to receive data using the PUCCH after the de-overlapping process.

It should be noted here that the above-mentioned device provided by the embodiment of the present disclosure can implement all the method steps implemented by the above-mentioned method embodiment applied to the network side device, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor- readable storage medium. Based on this understanding, the technical solution of the present disclosure is essentially or the part that contributes to the prior art or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

As shown in FIG. 17, an embodiment of the present disclosure further provides a terminal, including: a memory 1720, a transceiver 1700, and a processor 1710; where the memory 1720 is used to store a computer program; the transceiver 1700 is used to send and receive data under the control of the processor 1710; the processor 1710 is used to read the computer program in the memory and perform the following operations:
when physical uplink control channels (PUCCHs) are overlapped, determining a processing order for the PUCCHs according to priorities of uplink control information (UCI) carried by the PUCCHs and/or starting time of the PUCCHs;
performing a de-overlapping process for the PUCCHs according to the processing order.

Optionally, the processor is configured to read the computer program in the memory to perform at least one of the following:
when first PUCCH with repetitions overlaps with the M second PUCCHs, determining a processing order for the M second PUCCHs according to priorities of UCI carried by the M second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, when each of the N first PUCCHs has an overlapped PUCCH, at least one identical overlapped PUCCH exists between each of the N first PUCCHs.

Optionally, the processor is configured to read the computer program in the memory to perform:
repeating the following steps, until no PUCCH with repetitions overlaps with other PUCCHs in slots or sub-slots where the PUCCHs are located:
when the PUCCHs are overlapped, the terminal determining the processing order for the PUCCHs according to the priorities of the UCI carried by the PUCCHs and/or the starting time of the PUCCHs; and performing a de-overlapping processing for the PUCCHs according to the processing order.

Optionally, the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; where the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the processor is configured to read the computer program in the memory to perform one of the following:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
   any one of the X PUCCHs;
   the PUCCH with the longest duration among the X PUCCHs;
   any one of the PUCCHs with the longest duration among the X PUCCHs.

Optionally, the processor is configured to read the computer program in the memory to perform one of the following:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the processor is configured to read the computer program in the memory to perform:
determining the processing order for the PUCCHs according to a descending order of priorities of the UCI carried by the PUCCHs.

Optionally, the processor is configured to read the computer program in the memory to perform:
determining the processing order for the PUCCHs according to an order from the PUCCH with an early starting time to the PUCCH with a late starting time.

Optionally, the processor is configured to read the computer program in the memory to perform:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
   or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

Optionally, the starting time includes at least one of the following:
starting slot;
start sub-slot;
start symbol.

Optionally, after the de-overlapping process for the PUCCHs, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priorities of the UCI includes:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

Optionally, the transceiver is further configured to perform:
sending data through the PUCCH subjected to the de-overlapping process.

Among them, in Figure 17, the bus architecture may include any number of interconnected buses and bridges, specifically one or more processors represented by processor 1710 and various circuits of memory represented by memory 1720 are linked together. The bus architecture can also link various other circuits such as peripherals, voltage regulators, and power management circuits together, which are all well known in the art, so they are not further described herein. The bus interface provides an interface. The transceiver 1700 can be a plurality of components, that is, including a transmitter and a transceiver, providing a unit for communicating with various other devices on a transmission medium. For different user devices, the user interface 1730 can also be an interface that can connect external and internal devices, and the connected devices include but are not limited to a keypad, a display, a speaker, a microphone, a joystick, etc. The processor 1710 is responsible for managing the bus architecture and general processing, and the memory 1720 can store data used by the processor 1710 when performing operations.

The processor 1710 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned terminal provided in the embodiment of the present disclosure can implement all the method steps implemented by the above-mentioned method embodiment applied to the terminal, and can achieve the same technical effect. The parts and beneficial effects of this embodiment that are the same as the method embodiment will not be described in detail here.

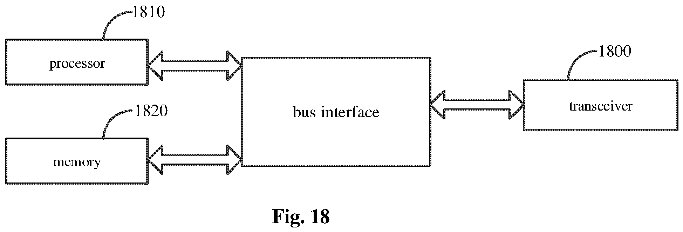

As shown in FIG. 18, an embodiment of the present disclosure further provides a network side device, including: a memory 1820, a transceiver 1800, and a processor 1810; where the memory 1820 is used to store a computer program; the transceiver 1800 is used to send and receive data under the control of the processor 1810; the processor 1810 is used to read the computer program in the memory and perform the following operations:
when physical uplink control channels (PUCCHs) are overlapped, a network side device determining a processing order for the PUCCHs according to priorities of uplink control information (UCI) carried by the PUCCHs and/or starting time of the PUCCHs;
performing a de-overlapping process for the PUCCHs according to the processing order.

Optionally, the processor is configured to read the computer program in the memory to perform at least one of the following:
when first PUCCH with repetitions overlaps with the M second PUCCHs, determining a processing order for the second PUCCHs according to the priorities of UCI carried by the second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

Optionally, a part of the first PUCCHs among the N first PUCCHs have overlapped PUCCHs;
or,
each of the N first PUCCHs has an overlapped PUCCH.

Optionally, after the de-overlapping process for the PUCCHs, there is no first PUCCH overlapped with other PUCCHs in the remaining PUCCHs.

Optionally, the processor is configured to read the computer program in the memory to perform:
repeating the following steps, until no PUCCH with repetitions overlaps with other PUCCHs in slots or sub-slots where the PUCCHs are located:
when the PUCCHs are overlapped, the network side device determining the processing order for the PUCCHs according to the priorities of the UCI carried by the PUCCHs and/or the starting time of the PUCCHs; and performing a de-overlapping processing for the PUCCHs according to the processing order.

Optionally, the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
where the third PUCCH is a PUCCH with repetitions or not a PUCCH with repetitions.

Optionally, the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; where the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

Optionally, the first PUCCH candidate set initially includes:
all PUCCHs in a slot or a sub-slot; or, all PUCCHs with repetitions in a slot or a sub-slot and the PUCCH overlapped with the PUCCHs with repetitions.

Optionally, the processor is configured to read the computer program in the memory to perform one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

Optionally, the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

Optionally, the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
   any one of the X PUCCHs;
   the PUCCH with the longest duration among the X PUCCHs;
   any one of the PUCCHs with the longest duration among the X PUCCHs.

Optionally, the processor is configured to read the computer program in the memory to perform one of the following methods:
Method 1: discarding other PUCCHs except a fifth PUCCH in the second PUCCH candidate set; where the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or the starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

Optionally, the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

Optionally, the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

Optionally, the processor is configured to read the computer program in the memory to perform:
determining the processing order for the PUCCHs according to a descending order of priorities of the UCI carried by the PUCCHs.

Optionally, the processor is configured to read the computer program in the memory to perform:
determining the processing order for the PUCCHs according to an order from the PUCCH with an early starting time to the PUCCH with a late starting time.

Optionally, the processor is configured to read the computer program in the memory to perform:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
   or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

Optionally, the starting time includes at least one of the following:
starting slot;
start sub-slot;
start symbol.

Optionally, after the de-overlapping process for the PUCCHs, there is no first PUCCH overlapped with other PUCCHs in the remaining PUCCHs.

Optionally, the UCI includes at least one of the following:
Hybrid Automatic Repeat Request Acknowledgement (HARQ-ACK);
Scheduling Request (SR);
Channel State Information (CSI).

Optionally, the priorities of the UCI includes:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

Optionally, the transceiver is further configured to perform:
receiving data through the PUCCH subjected to the de-overlapping process

In FIG. 18, the bus architecture may include any number of interconnected buses and bridges, specifically one or more processors represented by processor 1810 and various circuits of memory represented by memory 1820 are linked together. The bus architecture may also link together various other circuits such as peripherals, voltage regulators, and power management circuits, which are well known in the art and are therefore not further described herein. The bus interface provides an interface. The transceiver 1800 may be a plurality of components, namely, a transmitter and a transceiver, providing a unit for communicating with various other devices on a transmission medium. The processor 1810 is responsible for managing the bus architecture and general processing, and the memory 1820 may store data used by the processor 1810 when performing operations.

The processor 1810 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned network side device provided in the embodiment of the present disclosure can implement all the method steps implemented by the above-mentioned method embodiment applied to the network side device, and can achieve the same technical effect. The parts and beneficial effects that are the same as the method embodiment in this embodiment will not be described in detail here.

In addition, a specific embodiment of the present disclosure further provides a processor-readable storage medium on which a computer program is stored, where when the program is executed by the processor, the steps of the above-mentioned method for processing overlapping physical uplink control channels are implemented. And the same technical effect can be achieved, so it will not be repeated here to avoid repetition. Among them, the readable storage medium can be any available medium or data storage device that can be accessed by the processor, including but not limited to magnetic storage (such as floppy disk, hard disk, magnetic tape, magneto-optical disk (MO)), etc.), optical storage (such as compact disk (CD), digital video disc (DVD), Blu-ray Disc (BD), high-definition versatile disc (HVD), etc.), and semiconductor memory (such as ROM, erasable programmable ROM (EPROM), electrically erasable programmable read-only memory (Electrically EPROM, EEPROM), non-volatile memory (NAND FLASH), solid-state drive (Solid State Disk or Solid State Drive, SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are performed on the computer or other programmable device to produce a computer-implemented process, whereby the instructions executed on the computer or other programmable device provide steps for implementing the functions specified in one or more flows of the flowchart and/or one or more blocks of the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, a module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (digital signal processor, DSP), or one or more field programmable gate arrays (FPGA), etc. For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The terms "first", "second", etc. in the specification and claims of the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and /or" in the specification and claims represents at least one of the connected objects, such as A and/or B and/or C, indicating the inclusion of 7 situations including single A, single B, single C, and both A and B exist, both B and C exist, both A and C exist, and both A, B and C exist. Similarly, the use of "at least one of A and B" in the specification and claims should be understood as "single A, single B, or both A and B exist".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A method for processing overlapping physical uplink control channels, comprising:
when physical uplink control channels (PUCCHs) are overlapped, a terminal determining a processing order for the PUCCHs according to priorities of uplink control information (UCI) carried by the PUCCHs and/or starting time of the PUCCHs;
performing a de-overlapping process for the PUCCHs according to the processing order.

2. The method according to claim 1, wherein when physical uplink control channels (PUCCHs) are overlapped, the terminal determining the processing order of the PUCCHs according to the priority of UCI carried by the PUCCHs and/or the starting time of the PUCCHs comprises at least one of the following:
when first PUCCH with repetitions overlaps with M second PUCCHs, determining a processing order for the M second PUCCHs according to priorities of UCI carried by the M second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

3. The method according to claim 2, wherein
a part of the first PUCCHs among the N first PUCCHs have overlapped PUCCHs;
or,
each of the N first PUCCHs has an overlapped PUCCH.

4. The method according to claim 3, wherein when each of the N first PUCCHs has an overlapped PUCCH, at least one identical overlapped PUCCH exists between each of the N first PUCCHs.

5. The method according to claim 1, further comprising:
repeating the following steps, until no PUCCH with repetitions overlaps with other PUCCHs in slots or sub-slots where the PUCCHs are located:
when the PUCCHs are overlapped, the terminal determining the processing order for the PUCCHs according to the priorities of the UCI carried by the PUCCHs and/or the starting time of the PUCCHs; and performing a de-overlapping processing for the PUCCHs according to the processing order.

6. The method according to claim 1, wherein when the PUCCHs are overlapped, the terminal determining the processing order for the PUCCHs according to the priorities of UCI carried by the PUCCHs and/or the starting time of the PUCCHs comprises:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
wherein the third PUCCH is a PUCCH with repetitions or not a PUCCH with repetitions.

7. The method according to claim 6, wherein the determining the third PUCCH according to the priorities of the UCI carried by the PUCCHs and/or the starting time of the PUCCHs comprises:
Step 1: determining the third PUCCH from a first PUCCH candidate set according to the priorities of the UCI carried by the PUCCHs and the starting time of the PUCCHs;
the method further comprises:
Step 2: determining the fourth PUCCH from the first PUCCH candidate set; wherein the third PUCCH and the fourth PUCCH constitute a second PUCCH candidate set;
the performing the de-overlapping processing between the PUCCH with repetitions and other PUCCHs comprises:
Step 3: performing the de-overlapping process for the PUCCH with repetitions and other PUCCHs in the second PUCCH candidate set;
the method further comprises:
Step 4: updating the first PUCCH candidate set to obtain a third PUCCH candidate set; determining to execute the Step 1 or to end the process according to the third PUCCH candidate set.

8. The method according to claim 7, wherein the first PUCCH candidate set initially comprises:
all PUCCHs in a slot or a sub-slot; or, all PUCCHs with repetitions in a slot or a sub-slot and the PUCCH overlapped with the PUCCHs with repetitions.

9. The method according to claim 7, wherein the determining the third PUCCH from the first PUCCH candidate set according to the priorities of the UCI carried by the PUCCHs and the starting time of the PUCCHs comprising one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

10. The method according to claim 9, wherein the determining the third PUCCH from the first PUCCH candidate set according to the priorities of the UCI carried by the PUCCHs and the starting time of the PUCCHs further comprises:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

11. The method according to claim 9 or 10, wherein the determining the third PUCCH from the first PUCCH candidate set further comprises:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
any one of the X PUCCHs;
the PUCCH with the longest duration among the X PUCCHs;
any one of the PUCCHs with the longest duration among the X PUCCHs.

12. The method according to claim 7, wherein the performing the de-overlapping process for the PUCCH with repetitions and other PUCCHs in the second PUCCH candidate set comprises one of the following methods:
Method 1: discarding other PUCCHs except a fifth PUCCH in the second PUCCH candidate set; wherein the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

13. The method according to claim 7 or 12, wherein the updating the first PUCCH candidate set comprises at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

14. The method according to claim 7, wherein the determining to execute Step 1 or to end the operation according to the third PUCCH candidate set comprises one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

15. The method according to claim 1, 2 or 6, wherein the determining the processing order for the PUCCHs according to the priorities of the UCI carried by the PUCCHs comprises:
determining the processing order for the PUCCHs according to a descending order of priorities of the UCI carried by the PUCCHs.

16. The method according to claim 1, 2 or 6, wherein the determining the processing order for the PUCCHs according to the starting time of the PUCCHs comprises:
determining the processing order for the PUCCHs according to an order from the PUCCH with an early starting time to the PUCCH with a late starting time.

17. The method according to claim 1, 2 or 6, wherein the determining the processing order for the PUCCHs according to the priorities of the UCI carried by the PUCCHs and the starting time of the PUCCHs comprises:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

18. The method according to claim 1, 2 or 6, wherein the starting time comprises at least one of the following:
starting slot;
start sub-slot;
start symbol.

19. The method according to claim 2, wherein after the de-overlapping process for the PUCCHs, there is no first PUCCH overlapped with other PUCCHs in the remaining PUCCHs.

20. The method according to claim 1, wherein the UCI comprises at least one of the following:
Hybrid Automatic Repeat Request Acknowledgement (HARQ-ACK);
Scheduling Request (SR);
Channel State Information (CSI).

21. The method according to claim 20, wherein the priorities of the UCI comprises:
a priority of the HARQ-ACK is higher than a priority of the SR;
a priority of the SR is higher than a priority of the CSI;
among the CSIs, a priority of the CSI with a higher priority is higher than a priority of the CSI with a lower priority.

22. The method according to claim 1, further comprising:
sending data through the PUCCH subjected to the de-overlapping process.

23. A method for processing overlapping physical uplink control channels, comprising:
when physical uplink control channels (PUCCHs) are overlapped, a network side device determining a processing order for the PUCCHs according to priorities of uplink control information (UCI) carried by the PUCCHs and/or starting time of the PUCCHs;
performing a de-overlapping process for the PUCCHs according to the processing order.

24. The method according to claim 23, wherein when physical uplink control channels (PUCCHs) are overlapped, the network side device determining the processing order for the PUCCHs according to the priorities of UCI carried by the PUCCHs and/or the starting time of the PUCCHs comprises at least one of the following:
when first PUCCH with repetitions overlaps with M second PUCCHs, determining a processing order for the second PUCCHs according to the priorities of UCI carried by the second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

25. The method according to claim 24, wherein
a part of the first PUCCHs among the N first PUCCHs have overlapped PUCCHs;
or,
each of the N first PUCCHs has an overlapped PUCCH.

26. The method according to claim 25, wherein when each of the N first PUCCHs has an overlapped PUCCH, at least one identical overlapped PUCCH exists between each of the N first PUCCHs.

27. The method according to claim 23, further comprising:
repeating the following steps, until no PUCCH with repetitions overlaps with other PUCCHs in slots or sub-slots where the PUCCHs are located:
when the PUCCHs are overlapped, the network side device determining the processing order for the PUCCHs according to the priorities of the UCI carried by the PUCCHs and/or the starting time of the PUCCHs; and performing a de-overlapping processing for the PUCCHs according to the processing order.

28. The method according to claim 23, wherein when the PUCCHs are overlapped, the network side device determining the processing order for the PUCCHs according to the priorities of UCI carried by the PUCCHs and/or the starting time of the PUCCHs comprises:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
wherein the third PUCCH is a PUCCH with repetitions or not a PUCCH with repetitions.

29. The method according to claim 28, wherein the determining the third PUCCH according to the priorities of the UCI carried by the PUCCHs and/or the starting time of the PUCCHs comprises:
Step 1: determining the third PUCCH from a first PUCCH candidate set according to the priorities of the UCI carried by the PUCCHs and the starting time of the PUCCHs;
the method further comprises:
Step 2: determining the fourth PUCCH from the first PUCCH candidate set; wherein the third PUCCH and the fourth PUCCH constitute a second PUCCH candidate set;
the performing the de-overlapping processing between the PUCCH with repetitions and other PUCCHs comprises:
Step 3: performing the de-overlapping process for the PUCCH with repetitions and other PUCCHs in the second PUCCH candidate set;
the method further comprises:
Step 4: updating the first PUCCH candidate set to obtain a third PUCCH candidate set; determining to execute the Step 1 or to end the process according to the third PUCCH candidate set.

30. The method according to claim 29, wherein the first PUCCH candidate set initially comprises:
all PUCCHs in a slot or a sub-slot; or, all PUCCHs with repetitions in a slot or a sub-slot and the PUCCH overlapped with the PUCCHs with repetitions.

31. The method according to claim 29, wherein the determining the third PUCCH from the first PUCCH candidate set according to the priorities of the UCI carried by the PUCCHs and the starting time of the PUCCHs comprising one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

32. The method according to claim 31, wherein the determining the third PUCCH from the first PUCCH candidate set according to the priorities of the UCI carried by the PUCCHs and the starting time of the PUCCHs further comprises:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

33. The method according to claim 31 or 32, wherein the determining the third PUCCH from the first PUCCH candidate set further comprises:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
any one of the X PUCCHs;
the PUCCH with the longest duration among the X PUCCHs;
any one of the PUCCHs with the longest duration among the X PUCCHs.

34. The method according to claim 29, wherein the performing the de-overlapping process for the PUCCH with repetitions and other PUCCHs in the second PUCCH candidate set comprises one of the following methods:
Method 1: discarding other PUCCHs except a fifth PUCCH in the second PUCCH candidate set; wherein the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or the starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

35. The method according to claim 29 or 34, wherein the updating the first PUCCH candidate set comprises at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

36. The method according to claim 29, wherein the determining to execute Step 1 or to end the operation according to the third PUCCH candidate set comprises one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

37. The method according to claim 23, 24 or 28, wherein the determining the processing order for the PUCCHs according to the priorities of the UCI carried by the PUCCHs comprises:
determining the processing order for the PUCCHs according to a descending order of priorities of the UCI carried by the PUCCHs.

38. The method according to claim 23, 24 or 28, wherein the determining the processing order for the PUCCHs according to the starting time of the PUCCHs comprises:
determining the processing order for the PUCCHs according to an order from the PUCCH with an early starting time to the PUCCH with a late starting time.

39. The method according to claim 23, 24 or 28, wherein the determining the processing order for the PUCCHs according to the priorities of the UCI carried by the PUCCHs and the starting time of the PUCCHs comprises:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

40. The method according to claim 23, 24 or 28, wherein the starting time comprises at least one of the following:
starting slot;
start sub-slot;
start symbol.

41. The method according to claim 24, wherein after the de-overlapping process for the PUCCHs, there is no first PUCCH overlapped with other PUCCHs in the remaining PUCCHs.

42. The method according to claim 23, further comprising:
receiving data through the PUCCH subjected to the de-overlapping process.

43. A terminal comprising: a memory, a transceiver, and a processor:
the memory is configured to store a computer program; a transceiver is configured to send and receive data under a control of the processor; and a processor is configured to read the computer program in the memory to perform:
when physical uplink control channels (PUCCHs) are overlapped, determining a processing order for the PUCCHs according to priorities of uplink control information (UCI) carried by the PUCCHs and/or starting time of the PUCCHs;
performing a de-overlapping process for the PUCCHs according to the processing order.

44. The terminal according to claim 43, wherein processor is configured to read the computer program in the memory to perform at least one of the following:
when first PUCCH with repetitions overlaps with M second PUCCHs, determining a processing order for the M second PUCCHs according to priorities of UCI carried by the M second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

45. The terminal according to claim 44, wherein
a part of the first PUCCHs among the N first PUCCHs have overlapped PUCCHs;
or,
each of the N first PUCCHs has an overlapped PUCCH.

46. The terminal according to claim 45, wherein when each of the N first PUCCHs has an overlapped PUCCH, at least one identical overlapped PUCCH exists between each of the N first PUCCHs.

47. The terminal according to claim 43, wherein the processor is configured to read the computer program in the memory to perform:
repeating the following steps, until no PUCCH with repetitions overlaps with other PUCCHs in slots or sub-slots where the PUCCHs are located:
when the PUCCHs are overlapped, the terminal determining the processing order for the PUCCHs according to the priorities of the UCI carried by the PUCCHs and/or the starting time of the PUCCHs; and performing a de-overlapping processing for the PUCCHs according to the processing order.

48. The terminal according to claim 43, wherein the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
wherein the third PUCCH is a PUCCH with repetitions or not a PUCCH with repetitions.

49. The terminal according to claim 48, wherein the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; wherein the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

50. The terminal according to claim 49, wherein the first PUCCH candidate set initially comprises:
all PUCCHs in a slot or a sub-slot; or, all PUCCHs with repetitions in a slot or a sub-slot and the PUCCH overlapped with the PUCCHs with repetitions.

51. The terminal according to claim 49, wherein the processor is configured to read the computer program in the memory to perform one of the following:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

52. The terminal according to claim 51, wherein the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

53. The terminal according to claim 51 or 52, wherein the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
any one of the X PUCCHs;
the PUCCH with the longest duration among the X PUCCHs;
any one of the PUCCHs with the longest duration among the X PUCCHs.

54. The terminal according to claim 49, wherein the processor is configured to read the computer program in the memory to perform one of the following:
Method 1: discarding other PUCCHs except a fifth PUCCH in the second PUCCH candidate set; wherein the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

55. The terminal according to claim 49 or 54, wherein the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

56. The terminal according to claim 49, wherein the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

57. The terminal according to claim 43, 44 or 48, wherein the processor is configured to read the computer program in the memory to perform:
determining the processing order for the PUCCHs according to a descending order of priorities of the UCI carried by the PUCCHs.

58. The terminal according to claim 43, 44 or 48, wherein the processor is configured to read the computer program in the memory to perform:
determining the processing order for the PUCCHs according to an order from the PUCCH with an early starting time to the PUCCH with a late starting time.

59. The terminal according to claim 43, 44 or 48, wherein the processor is configured to read the computer program in the memory to perform:
determining a first processing order according to a descending order of priorities of the UCI carried by the PUCCHs; if at least two UCI carried by the PUCCHs have the same priority, determining a second processing order according to the order from the PUCCH with an early starting time to the PUCCH with a late starting time;
or,
determining the third processing order according to an order from the PUCCH with an early starting time to the PUCCH with a late starting time; if at least two PUCCHs have the same starting time, determining a fourth processing order according to a descending order of priorities of the UCI of the PUCCHs with the same starting time.

60. The terminal according to claim 44, wherein after the de-overlapping process for the PUCCHs, there is no first PUCCH overlapped with other PUCCHs in the remaining PUCCHs.

61. The terminal according to claim 1, wherein the transceiver is further configured to perform:
sending data through the PUCCH subjected to the de-overlapping process.

62. A network side device, comprising: a memory, a transceiver, and a processor, wherein
the memory is configured to store a computer program; a transceiver is configured to send and receive data under a control of the processor; and a processor is configured to read the computer program in the memory to perform:
when physical uplink control channels (PUCCHs) are overlapped, a network side device determining a processing order for the PUCCHs according to priorities of uplink control information (UCI) carried by the PUCCHs and/or starting time of the PUCCHs;
performing a de-overlapping process for the PUCCHs according to the processing order.

63. The network side device according to claim 62, wherein the processor is configured to read the computer program in the memory to perform at least one of the following:
when first PUCCH with repetitions overlaps with M second PUCCHs, determining a processing order for the second PUCCHs according to the priorities of UCI carried by the second PUCCHs and/or starting time of the M second PUCCHs;
when there are N first PUCCHs with repetitions, determining a processing order for the first PUCCHs according to priorities of UCI carried by the first PUCCHs and/or starting time of the first PUCCHs;
M and N are both greater than or equal to 2.

64. The network side device according to claim 63, wherein
a part of the first PUCCHs among the N first PUCCHs have overlapped PUCCHs;
or,
each of the N first PUCCHs has an overlapped PUCCH.

65. The network side device according to claim 63, wherein after the de-overlapping process for the PUCCHs, there is no first PUCCH overlapped with other PUCCHs in the remaining PUCCHs.

66. The network side device according to claim 62, wherein the processor is configured to read the computer program in the memory to perform:
repeating the following steps, until no PUCCH with repetitions overlaps with other PUCCHs in slots or sub-slots where the PUCCHs are located:
when the PUCCHs are overlapped, the network side device determining the processing order for the PUCCHs according to the priorities of the UCI carried by the PUCCHs and/or the starting time of the PUCCHs; and performing a de-overlapping processing for the PUCCHs according to the processing order.

67. The network side device according to claim 62, wherein the processor is configured to read the computer program in the memory to perform:
determining a third PUCCH according to the priorities of the UCI carried by the PUCCHs and/or the starting time of the PUCCHs;
when a fourth PUCCH overlaps with the third PUCCH, and there is a PUCCH with repetitions in the third PUCCH and the fourth PUCCH, determining to perform a de-overlapping process between the PUCCH with repetitions and other PUCCHs;
wherein the third PUCCH is a PUCCH with repetitions or not a PUCCH with repetitions.

68. The network side device according to claim 67, wherein the processor is configured to read the computer program in the memory to perform:
Step 1: determining the third PUCCH from a first PUCCH candidate set according to the priorities of the UCI carried by the PUCCHs and the starting time of the PUCCHs;
Step 2: determining the fourth PUCCH from the first PUCCH candidate set; wherein the third PUCCH and the fourth PUCCH constitute a second PUCCH candidate set;
Step 3: performing the de-overlapping process for the PUCCH with repetitions and other PUCCHs in the second PUCCH candidate set;
Step 4: updating the first PUCCH candidate set to obtain a third PUCCH candidate set; determining to execute the Step 1 or to end the process according to the third PUCCH candidate set.

69. The network side device according to claim 68, wherein the first PUCCH candidate set initially comprises:
all PUCCHs in a slot or a sub-slot; or, all PUCCHs with repetitions in a slot or a sub-slot and the PUCCH overlapped with the PUCCHs with repetitions.

70. The network side device according to claim 68, wherein the processor is configured to read the computer program in the memory to perform one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

71. The network side device according to claim 70, wherein the processor is configured to read the computer program in the memory to perform:
when the third PUCCH is determined according to the Method 3, if there are multiple PUCCHs with the highest UCI priority and the earliest starting slot or sub-slot in the first PUCCH candidate set, determining that the third PUCCH is one of the following:
any one of the multiple PUCCHs with the highest UCI priority and the earliest starting slot or sub-slot;
the PUCCH with an earliest start symbol among the multiple PUCCHs with the highest UCI priority and the earliest starting slot or sub-slot.

72. The network side device according to claim 70 or 71, wherein the processor is configured to read the computer program in the memory to perform:
if the number of the third PUCCHs determined according to the Method 1, the Method 2 or the Method 3 is X, and X is greater than 1, selecting a target PUCCHs from the third PUCCHs as the third PUCCH;
the target PUCCH is one of the following:
any one of the X PUCCHs;
the PUCCH with the longest duration among the X PUCCHs;
any one of the PUCCHs with the longest duration among the X PUCCHs.

73. The network side device according to claim 68, wherein the processor is configured to read the computer program in the memory to perform one of the following methods:
Method 1: discarding other PUCCHs except a fifth PUCCH in the second PUCCH candidate set; wherein the fifth PUCCH is a PUCCH with the highest UCI priority in the second PUCCH candidate set; if there are multiple PUCCHs with the highest UCI priority in the second PUCCH candidate set, the fifth PUCCH is the PUCCH with the earliest starting slot or sub-slot among the multiple PUCCHs with the highest UCI priority;
Method 2: discarding all fourth PUCCHs in the second PUCCH candidate set; or, if the third PUCCH is a PUCCH with repetitions, discarding all fourth PUCCHs in the second PUCCH candidate set; otherwise, discarding all PUCCHs with repetitions in the second PUCCH candidate set;
Method 3: for multiple PUCCHs with repetitions in the second PUCCH set, performing the de-overlapping processing in sequence according to the priorities of the UCI carried by the PUCCHs with repetitions and/or the starting time of the PUCCHs with repetitions; for multiple PUCCHs overlapped with one PUCCH with repetitions, performing the de-overlapping processing in sequence according to the priorities of the UCI carried by the multiple PUCCHs and/or the starting time of the PUCCHs.

74. The network side device according to claim 68 or 73, wherein the processor is configured to read the computer program in the memory to perform at least one of the following:
if there is no fourth PUCCH in the first PUCCH candidate set, deleting the third PUCCH from the first PUCCH candidate set;
if there is no PUCCH with repetitions in the second PUCCH candidate set, deleting the third PUCCH from the first PUCCH candidate set;
deleting the discarded PUCCH from the first PUCCH candidate set;
deleting the PUCCHs that are not repeatedly transmitted and do not overlap with the PUCCHs with repetitions in the first PUCCH candidate set;
if the de-overlapping process for the PUCCHs with repetitions and other PUCCHs in the second PUCCH candidate set is performed according to the Method 2, deleting the third PUCCH from the first PUCCH candidate set.

75. The network side device according to claim 68, wherein the processor is configured to read the computer program in the memory to perform one of the following:
if the third PUCCH candidate set is not empty, executing Step 1; otherwise, ending the process;
if there is only one PUCCH in the third PUCCH candidate set, ending the process; otherwise, executing the Step 1;
if there is no PUCCH in the third PUCCH candidate set that overlaps with the PUCCHs with repetitions, ending the process; otherwise, executing Step 1.

76. The network side device according to claim 62, wherein the transceiver is configured to perform:
receiving data through the PUCCH subjected to the de-overlapping process.

77. An apparatus for processing overlapping physical uplink control channels, applied to a terminal and comprising:
a first determining unit, configured to, when physical uplink control channels (PUCCHs) are overlapped, determine a processing order for the PUCCHs according to priorities of uplink control information (UCI) carried by the PUCCHs and/or starting time of the PUCCHs;
a first processing unit, configured to perform a de-overlapping process for the PUCCHs according to the processing order.

78. The apparatus according to claim 77, wherein the first determining unit comprises at least one of the following:
a first determining sub-unit, configured to, when first PUCCH with repetitions overlaps with M second PUCCHs, determine a processing order for the M second PUCCHs according to priorities of UCI carried by the M second PUCCHs and/or starting time of the M second PUCCHs;
a second determining sub-unit, configured to, when there are N first PUCCHs with repetitions, determine a processing order for the first PUCCHs according to priorities of UCI carried by the first PUCCHs and/or starting time of the first PUCCHs;
M and N are both greater than or equal to 2.

79. The apparatus according to claim 77, wherein the first determining unit comprises:
a fifth determining sub-unit, configured to determine a third PUCCH according to the priorities of the UCI carried by the PUCCHs and/or the starting time of the PUCCHs;
a sixth determining sub-unit, configured to, when a fourth PUCCH overlaps with the third PUCCH, and there is a PUCCH with repetitions in the third PUCCH and the fourth PUCCH, determine to perform a de-overlapping process between the PUCCH with repetitions and other PUCCHs;
wherein the third PUCCH is a PUCCH with repetitions or not a PUCCH with repetitions.

80. The apparatus according to claim 79, wherein the fifth determining sub-unit is further configured to perform:
Step 1: determining the third PUCCH from a first PUCCH candidate set according to the priorities of the UCI carried by the PUCCHs and the starting time of the PUCCHs;
the apparatus further comprises a third determining unit configured to perform:
Step 2: determining the fourth PUCCH from the first PUCCH candidate set; wherein the third PUCCH and the fourth PUCCH constitute a second PUCCH candidate set;
the apparatus further comprises a third processing unit configured to perform:
Step 3: performing the de-overlapping process for the PUCCH with repetitions and other PUCCHs in the second PUCCH candidate set;
the apparatus further comprises a fourth processing unit configured to perform:
Step 4: updating the first PUCCH candidate set to obtain a third PUCCH candidate set; determining to execute the Step 1 or to end the process according to the third PUCCH candidate set.

81. The apparatus according to claim 80, wherein the first PUCCH candidate set initially comprises:
all PUCCHs in a slot or a sub-slot; or, all PUCCHs with repetitions in a slot or a sub-slot and the PUCCH overlapped with the PUCCHs with repetitions.

82. The method according to claim 7, wherein the fifth determining sub-unit is further configured to perform one of the following methods:
Method 1: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with an earliest start symbol among the multiple PUCCHs with the highest UCI priority;
Method 2: determining that the third PUCCH is the PUCCH with the earliest start symbol in the first PUCCH candidate set; if there are multiple PUCCHs with the earliest start symbols in the first PUCCH candidate set, determining that the third PUCCH is the PUCCH with the highest UCI priority among the multiple PUCCHs with the earliest start symbols;
Method 3: determining that the third PUCCH is the PUCCH with the highest UCI priority in the first PUCCH candidate set; if there are multiple PUCCHs with the highest UCI priority in the first PUCCH candidate set, determining that the third PUCCH is the PUCCH with the earliest starting slot or sub-slot among the multiple PUCCHs with the highest UCI priority.

83. An apparatus for processing overlapping physical uplink control channels, applied to a network side device and comprising:
a second determining unit, configured to, when physical uplink control channels (PUCCHs) are overlapped, determine a processing order for the PUCCHs according to priorities of uplink control information (UCI) carried by the PUCCHs and/or starting time of the PUCCHs;
a second processing unit, configured to perform a de-overlapping process for the PUCCHs according to the processing order.

84. A processor-readable storage medium, storing a computer program, wherein the computer program is executed by a processor to perform the method for processing overlapping physical uplink control channels according to any one of claims 1 to 22, or perform the method for processing overlapping physical uplink control channels according to any one of claims 23 to 42.
